# EUROPEAN PATENT APPLICATION

(11) **EP 4 322 606 A1**
(43) Date of publication of application: **14.02.2024**
(21) Application number: 22803808.9
(22) Date of filing: 07.05.2022
(51) Int. Cl.: H04W 28/06, H04W 80/00

(54) **COMMUNICATION METHOD AND DEVICE**

(30) Priority: 19.05.2021 CN 202110545581
(71) Applicant: Huawei Technologies Co., Ltd., Longgang Shenzhen, Guangdong 518129 (CN)
(72) Inventor: LI, Yanbing, Shenzhen, Guangdong 518129 (CN); CHANG, Junren, Shenzhen, Guangdong 518129 (CN); YE, Chaoling, Shenzhen, Guangdong 518129 (CN); LI, Jiaojiao, Shenzhen, Guangdong 518129 (CN); LIU, Nannan, Shenzhen, Guangdong 518129 (CN)
(74) Representative: Epping - Hermann - Fischer
(86) International application number: PCT/CN2022/091574
(87) International publication number: WO 2022/242484

(57) **Abstract**

This application relates to a communication method and apparatus. A first concatenated data packet is obtained, where the first concatenated data packet includes N original data packets, N is an integer greater than or equal to 2, and the first concatenated data packet is associated with a first count value. A second concatenated data packet is sent, where the second concatenated data packet is obtained by performing integrity protection and/or encryption on the first concatenated data packet. In embodiments of this application, the first concatenated data packet can be associated with the first count value, so that the first concatenated data packet can also have a corresponding count value like the original data packet, and both a transmit end and a receive end of the second concatenated data packet can perform processing such as ordering or retransmission on the second concatenated data packet based on the first count value.

## Description

### CROSS-REFERENCE TO RELATED APPLICATIONS

This application claims priority to Chinese Patent Application No. 202110545581.7, filed with the China National Intellectual Property Administration on May 19, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

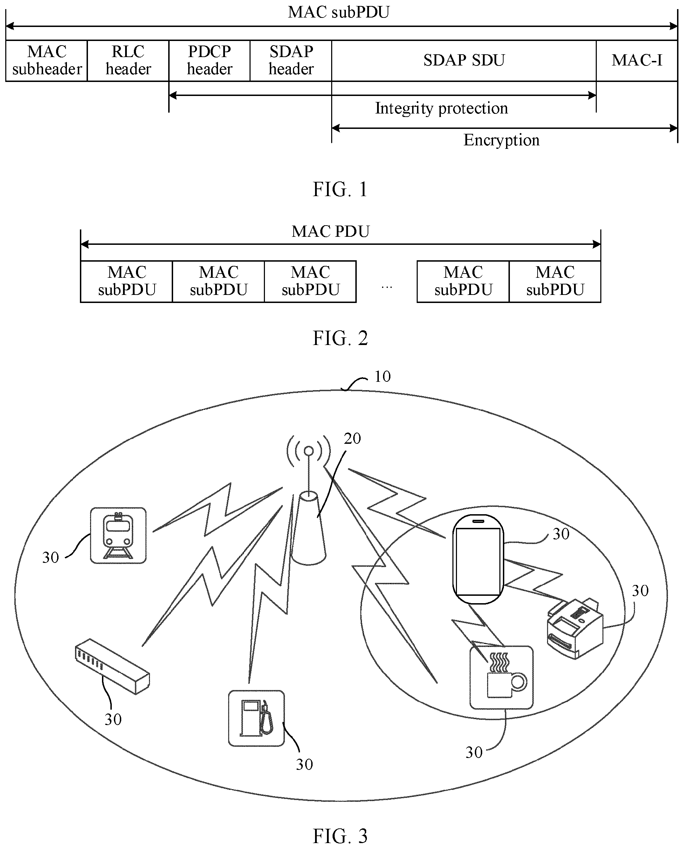

According to the 3rd Generation Partnership Project (3rd generation partnership project, 3GPP) standard, after a layer 2 (layer 2, L2) of user equipment (user equipment, UE) or a base station receives a service data adaptation protocol (service data adaptation protocol, SDAP) service data unit (service data unit, SDU) from a higher layer, an SDAP header (header), a packet data convergence protocol (packet data convergence protocol, PDCP) header, a radio link control (radio link control, RLC) header, and a media access control (media access control, MAC) subheader (subheader) are sequentially added before the SDAP SDU. In addition, L2 further performs integrity protection processing on the SDAP header, the PDCP header, and the SDAP SDU to generate a message authentication code for integrity (message authentication code for integrity, MAC-I), and performs encryption processing on the SDAP SDU and the MAC-I to form a MAC subPDU. Refer to FIG. 1. The SDAP header is optional. For example, if the SDAP header does not exist, L2 may perform integrity protection processing on the SDAP SDU and the PDCP header to generate the MAC-I, and perform encryption processing on the SDAP SDU and the MAC-I to form the MAC subPDU. L2 then concatenates a plurality of MAC subPDUs to form one MAC PDU. Refer to FIG. 2.

It can be seen from FIG. 2 that one MAC PDU includes a plurality of MAC subPDUs. It can be seen from FIG. 1 that each MAC subPDU may include a plurality of headers, for example, an SDAP header, a PDCP header, an RLC header, and a MAC subheader. The headers need to occupy a large quantity of transmission resources, resulting in high overheads of the UE or the base station during packet assembly.

### SUMMARY

Embodiments of this application provide a communication method and apparatus, to reduce packet reassembly overheads.

According to a first aspect, a communication method is provided, and the method may be performed by a first communication apparatus. The first communication apparatus is, for example, a terminal device, a circuit system, or a large device including a terminal device. The circuit system can implement a function of the terminal device. Alternatively, the first communication apparatus is, for example, a network device, a large device including a network device, or a circuit system. The circuit system can implement a function of the network device. For example, the network device is an access network device, for example, a base station. The method includes: obtaining a first concatenated data packet, where the first concatenated data packet includes N original data packets, N is an integer greater than or equal to 2, and the first concatenated data packet is associated with a first count value; and sending a second concatenated data packet, where the second concatenated data packet is obtained by performing integrity protection and/or encryption on the first concatenated data packet.

This embodiment of this application proposes a concept of a concatenated data packet. Because of being a concatenated data packet, the N original data packets included in the first concatenated data packet may share one set of headers, and the original data packets do not need to have their respective headers. Therefore, overheads during packet assembly can be reduced, and transmission resources can be saved. In addition, in this embodiment of this application, the first concatenated data packet can be associated with the first count value, so that the first concatenated data packet can also have a corresponding count value like the original data packet, and both a transmit end and a receive end of the second concatenated data packet can perform processing such as ordering or retransmission on the second concatenated data packet based on the first count value.

In an optional implementation, the first count value is a minimum count value of N count values, and the N count values are count values associated with the N original data packets. For example, the N original data packets are associated with N count values, and a minimum count value of the N count values is associated as the count value of the first concatenated data packet. In this manner, the first concatenated data packet has the associated first count value, and the N original data packets included in the first concatenated data packet also have corresponding associated count values, so that the receive end can not only order the first concatenated data packet, but also order the N original data packets when the first concatenated data packet needs to be restored.

In an optional implementation, the first count value is used for integrity protection and/or encryption of the first concatenated data packet. If integrity protection and/or encryption needs to be performed on the first concatenated data packet, the first count value may be used. It can be learned that the first concatenated data packet is associated with the count value, so that integrity protection and/or encryption can be performed on the first concatenated data packet.

In an optional implementation, a first sequence number is included in a header of the second concatenated data packet, the first sequence number is M least significant bits of the first count value, and M is an integer greater than or equal to 1 and less than or equal to 32. The second concatenated data packet may include the first sequence number, and the first sequence number is, for example, a PDCP SN of the second concatenated data packet.

In an optional implementation, the method further includes: compressing parts of the N original data packets other than SDAP headers; compressing the N original data packets; compressing the N original data packets and N LI headers corresponding to the N original data packets; or compressing parts of the N original data packets other than SDAP headers and N LI headers corresponding to the N original data packets. There may be a plurality of formats of the first concatenated data packet. For example, if the N LI headers of the N original data packets are located before the N original data packets, the N original data packets include N SDAP headers, and the N SDAP headers are placed before the corresponding original data packets in an interleaved manner, parts of the N original data packets other than the SDAP headers may be compressed, and other parts of the first concatenated data packet do not participate in compression. In another example, if the N LI headers of the N original data packets are located before the N original data packets, the N original data packets share one SDAP header, the SDAP header does not belong to any original data packet, and the SDAP header is located before the N original data packets, the N original data packets may be compressed, and other parts of the first concatenated data packet do not participate in compression. In another example, if the N original data packets include N LI headers, the N LI headers are placed before the corresponding original data packets in an interleaved manner, the N original data packets share one SDAP header, the SDAP header does not belong to any original data packet, and the SDAP header is located before the N original data packets, the N original data packets and the N LI headers corresponding to the N original data packets may be compressed, and other parts of the first concatenated data packet do not participate in compression. In still another example, if the N original data packets include N LI headers, the N LI headers are placed before the corresponding original data packets in an interleaved manner, the N original data packets include N SDAP headers, and the N SDAP headers are placed before the corresponding original data packets in an interleaved manner, parts of the N original data packets other than the SDAP headers and the N LI headers corresponding to the N original data packets may be compressed, and other parts of the first concatenated data packet do not participate in compression. It can be learned that when formats of the first concatenated data packet are different, the compression manner may also change.

In an optional implementation, if a transmit end of the second concatenated data packet is a terminal device, the method further includes: receiving a first message, where the first message indicates a first threshold, and the first threshold is used to determine whether an original data packet is concatenatable. If an original data packet is excessively long, a transmission gain that can be obtained if the original data packet is concatenated is not large, and even overheads are higher. Therefore, in this embodiment of this application, it is considered that an excessively long original data packet is not suitable for concatenation. Therefore, optionally, the network device may send the first threshold to the UE, where the first threshold is used to determine whether the original data packet participates in concatenation. By using the first threshold, a probability that an excessively long original data packet participates in concatenation can be reduced.

In an optional implementation, if a transmit end of the second concatenated data packet is a terminal device and a receive end of the second concatenated data packet is a network device, the method further includes: receiving a second message from the network device, where the second message indicates a second threshold, and the second threshold is used to determine whether concatenation of a concatenated data packet is completed. When data packets are concatenated, there may be an extreme length of the concatenation, or any plurality of original data packets cannot be always concatenated into one concatenated data packet. If a concatenated data packet is excessively long, a problem such as network congestion may occur. In addition, a capability of the UE may be limited, and some UEs cannot support an excessively long concatenated data packet. Therefore, optionally, the network device may send the second message to the UE, where the second message may indicate the second threshold, and the second threshold is, for example, an allowed maximum length of the concatenated data packet. By using the second threshold, a length of the concatenated data packet may be within a proper range.

In an optional implementation, the method further includes: sending first capability information of the terminal device to the network device, where the first capability information indicates a maximum length of a concatenated data packet supportable by the terminal device. The terminal device may send, to the network device, the maximum length of the concatenated data packet supported by the terminal device, so that the network device may consider the maximum length of the concatenated data packet supported by the terminal device when determining the second threshold, to enable the determined second threshold to better conform to an actual capability of the terminal device.

In an optional implementation, if a transmit end of the second concatenated data packet is a network device and a receive end of the second concatenated data packet is a terminal device, the method further includes: sending a second message to the terminal device, where the second message indicates a second threshold, and the second threshold is used to determine whether concatenation of a concatenated data packet is completed.

In an optional implementation, the method further includes: receiving first capability information from the terminal device, where the first capability information indicates a maximum length of a concatenated data packet supportable by the terminal device.

In an optional implementation, if a transmit end of the second concatenated data packet is a terminal device, the method further includes: receiving a third message, where the third message indicates to enable or disable a data packet concatenation function; or if a transmit end of the second concatenated data packet is a network device, the method further includes: sending a third message, where the third message indicates to enable or disable a data packet concatenation function. That the first communication apparatus can concatenate data packets is equivalent to enabling (or initiating or activating) the data packet concatenation function, which is considered as a capability of the first communication apparatus. Optionally, the network device may send enabling information to the UE, where the enabling information may indicate to enable (or activate) the data packet concatenation function, or indicate to disable (or inactivate) the data packet concatenation function. The terminal device may perform processing based on the indication of the network device, so that behavior of the terminal device is consistent with that of the network device.

In an optional implementation, the method further includes: determining to re-establish a PDCP entity, and sending, starting from a first data packet whose acknowledgment information is not received, data packets in ascending order of count values associated with data packets, where the sent data packets include the first concatenated data packet and/or original data packets. In addition, if being the terminal device, the first communication apparatus sends the data packet to the second network device; or if being a first network device, the first communication apparatus sends the data packet to the second network device, and then the second network device sends the data packet to the terminal device. In a communication process, a PDCP entity may be re-established. For example, when the UE performs cell handover, a PDCP entity may be re-established. Acknowledgment information is sent by an RLC layer of the first communication apparatus to a PDCP layer. After processing a data packet (including an original data packet and a concatenated data packet), a sending PDCP entity of the first communication apparatus sends the data packet to the RLC layer, and the RLC layer performs further processing on the data packet. The RLC layer of the first communication apparatus may send, if receiving an RLC status report of a data packet from an RLC layer of the receive end (for example, a second communication apparatus), acknowledgment information of the data packet to the PDCP layer; and does not send, if not receiving the RLC status report from the RLC layer of the receive end, the acknowledgment information of the data packet to the PDCP layer. For the PDCP layer of the first communication apparatus, if the acknowledgment information is not received, it is considered that the receive end does not receive the data packet. Therefore, during retransmission, the sending PDCP entity of the first communication apparatus may sequentially retransmit, starting from a first data packet whose acknowledgment information is not received (or starting from a first data packet that is not acknowledged by a lower layer), subsequent data packets, to reduce a probability of missing transmission.

In an optional implementation, the method further includes: determining that a second network device supports the data packet concatenation function, where the second network device is a receive end of the sent data packets. In the previous optional implementation, that the second network device supports the data packet concatenation function is used as an example. If the second network device supports the data packet concatenation function, when the first communication apparatus performs retransmission, if there is a concatenated data packet in a to-be-sent data packet, the first communication apparatus only needs to send the concatenated data packet, but does not need to concatenate the concatenated data packet. This manner is simple.

In an optional implementation, the method further includes: determining to re-establish a PDCP entity, and sending, from a first data packet whose acknowledgment information is not received, data packets in ascending order of count values associated with data packets, where the sent data packets include original data packets. In addition, if being the terminal device, the first communication apparatus sends the data packet to the second network device; or if being a first network device, the first communication apparatus sends the data packet to the second network device, and then the second network device sends the data packet to the terminal device. When sending data packets, the sending PDCP entity of the first communication apparatus may sequentially send, starting from a first data packet whose acknowledgment information is not received (or starting from a first data packet that is not acknowledged by a lower layer), subsequent data packets, to reduce a probability of missing transmission.

In an optional implementation, the method further includes: determining to re-establish a PDCP entity, and determining that the first concatenated data packet needs to be retransmitted; and de-concatenating the first concatenated data packet into the N original data packets. In the retransmission process in the previous optional implementation, the first communication apparatus retransmits the original data packets. It may be understood that if the retransmitted data packets include a concatenated data packet, the first communication apparatus may de-concatenate the concatenated data packet and then perform retransmission.

In an optional implementation, the method further includes: determining to re-establish a PDCP entity, and initializing a first variable to a first value, where the first value is 0, or the first value is determined based on a count value of the first data packet whose acknowledgment information is not received, and the first variable is used to determine a count value of a data packet.

In an optional implementation, the method further includes: determining to re-establish a PDCP entity, and determining that the first concatenated data packet needs to be retransmitted; and de-concatenating the first concatenated data packet into the N original data packets.

In an optional implementation, the method further includes: associating the sent data packets with count values sequentially based on the first variable.

For example, when associating a concatenated data packet with a count value, the first communication apparatus associates the concatenated data packet with a count value, but does not associate original data packets included in the concatenated data packet with count values. In this case, when the PDCP entity is re-established, the first communication apparatus may initialize the first variable to the first value, and then re-associate to-be-retransmitted original data packets with count values based on the first variable whose value is the first value, so that the retransmitted original data packets can have their respective count values. The first variable is, for example, a TX_NEXT variable.

In an optional implementation, the method further includes: determining that a second network device does not support the data packet concatenation function or does not support a parameter of data packet concatenation supported by a first network device and a terminal device, where the second network device is a receive end of the retransmitted data packets, the first network device is a receive end of the second concatenated data packet, and the terminal device is a transmit end of the second concatenated data packet. If the second network device does not support the data packet concatenation function or does not support the parameter of data packet concatenation supported by the first network device and the terminal device, if the to-be-retransmitted data packets include a concatenated data packet, the concatenated data packet needs to be de-concatenated before retransmission, so that the second network device can identify received data packets (original data packets).

According to a second aspect, another communication method is provided, and the method may be performed by a second communication apparatus. For example, the first communication apparatus is a terminal device, a circuit system, or a large device including a terminal device. The circuit system can implement a function of the terminal device. The second communication apparatus is a network device, a large device including a network device, or a circuit system. The circuit system can implement a function of the network device. Alternatively, the first communication apparatus is a network device, a large device including a network device, or a circuit system. The circuit system can implement a function of the network device. The second communication apparatus is a terminal device, a circuit system, or a large device including a terminal device. The circuit system can implement a function of the terminal device. For example, the network device is an access network device, for example, a base station. The method includes: receiving a second concatenated data packet; and determining a second count value associated with the second concatenated data packet, where the second count value is used for integrity verification and/or decryption of the second concatenated data packet.

In an optional implementation, the method further includes: performing decryption and/or integrity verification on the second concatenated data packet to obtain a first concatenated data packet, where the first concatenated data packet includes N original data packets, and N is an integer greater than or equal to 2.

In an optional implementation, the method further includes: de-concatenating the first concatenated data packet into the N original data packets.

In an optional implementation, the method further includes: associating the N original data packets with N consecutive count values starting from the second count value; or associating the second concatenated data packet with N consecutive count values starting from the second count value. For example, if the first communication apparatus associates the N original data packets with count values, the second communication apparatus may associate the N original data packets with N consecutive count values starting from the second count value. Alternatively, if the first communication apparatus does not associate the N original data packets with count values, but in addition to associating the second concatenated data packet with a first count value, reserves N-1 count values for the second concatenated data packet, the second communication apparatus may associate the second concatenated data packet with N consecutive count values starting from the second count value.

In an optional implementation, if the second count value is greater than or equal to a value of the second variable, updating the value of the second variable to the second count value plus N; or if a sum of the second count value and (N-1) is greater than or equal to a value of the second variable, updating the value of the second variable to the second count value plus N. The second variable indicates a count value of a next data packet expected to be received. For example, the second variable is RX_TEXT. The second communication apparatus may update the value of the second variable based on the second count value. Because the second count value is associated with the second concatenated data packet, and the second concatenated data packet includes the N original data packets, the N original data packets may be considered when the second variable is updated, so that the N original data packets also have a chance to participate in reordering.

In an optional implementation, if a first network device is a network device accessed by a terminal device before cell handover and the first network device is a receive end of the second concatenated data packet, the method further includes: determining to re-establish a PDCP entity, and sending the N original data packets to a second network device, where the second network device is a network device accessed by the terminal device after cell handover. In an uplink transmission process, when the PDCP entity is re-established, the first network device serving as a source network device may send, to the second network device, data packets received from the terminal device. For example, the first network device de-concatenates the concatenated data packet before being sent to the second network device.

In an optional implementation, if a first network device is a network device accessed by a terminal device before cell handover and the first network device is a receive end of the second concatenated data packet, or if a terminal device is a receive end of the second-level concatenated data packet, the method further includes: determining to re-establish a PDCP entity, and delivering a data packet stored in the PDCP entity to an upper layer or discarding a data packet stored in the PDCP entity. In a downlink transmission process, if the network device de-concatenates the concatenated data packet before retransmission during retransmission, and the network device does not associate an original data packet in the concatenated data packet with a count value during concatenation, the network device may initialize the first variable when the PDCP entity is re-established. In this case, the terminal device needs to deliver the data packet stored in the PDCP entity to the upper layer or discard the data packet, to reduce a conflict between a sequence number of a subsequently received data packet and that of a previously received data packet.

In an optional implementation, if a first network device is a network device accessed by a terminal device before cell handover and the first network device is a receive end of the second concatenated data packet, the method further includes: determining to re-establish a PDCP entity, and sending a value of a third variable to a second network device, where the third variable is used to determine a reordering window. In an uplink transmission process, if the first network device initializes the third variable when the PDCP entity is re-established, the first network device may send the value of the third variable to the second network device, and the second network device may update, based on the value, the value of the third variable maintained by the second network device, so that variables of the first network device and the second network device are kept the same. The third variable is, for example, an RX_DELIV variable.

In an optional implementation, if the terminal device is a receive end of the second concatenated data packet, the method further includes: determining to re-establish a PDCP entity, and initializing a third variable to a second value, where the second value is 0, or the second value is determined based on a count value of the first data packet whose acknowledgment information is not received, and the third variable is used to determine a reordering window. In a downlink transmission process, if the first network device associates a concatenated data packet with a count value when concatenating data packets, the first network device may initialize the value of the third variable when the PDCP entity is re-established, to re-associate a to-be-retransmitted original data packet with a count value based on the initialized third variable.

In an optional implementation, the method further includes: determining that the second network device does not support the data packet concatenation function or does not support a parameter of data packet concatenation supported by the first network device and the terminal device, where the second network device is a receive end of retransmitted data packets, and the terminal device is a transmit end of the second concatenated data packet; or the second network device is a receive end and a transmit end of retransmitted data packets (the first network device is a transmit end of the retransmitted data packets, and sends the retransmitted data packets to the second network device. In this case, the second network device is a receive end of the retransmitted data packets. In addition, after receiving the data packets, the second network device further needs to send the data packets to the terminal device. In this case, the second network device is also a transmit end of the data packets), and the terminal device is a receive end of the second concatenated data packet. For example, if the second network device does not support the data packet concatenation function or does not support the parameter of data packet concatenation supported by the first network device and the terminal device, the concatenated data packet needs to be de-concatenated before retransmission. Alternatively, even if the second network device supports the data packet concatenation function or supports the parameter of data packet concatenation supported by the first network device and the terminal device, the concatenated data packet may also be de-concatenated before retransmission during retransmission.

According to a third aspect, a communication apparatus is provided. The communication apparatus may be the terminal device according to either of the first aspect and the second aspect (the first communication apparatus or the second communication apparatus may implement a function of the terminal device). The communication apparatus has a function of the foregoing terminal device. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When implementing the sending function, the transceiver unit may be referred to as a sending unit (also referred to as a sending module sometimes). When implementing the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for the functional modules.

For example, if the first communication apparatus may implement a function of the terminal device, the processing unit is configured to obtain a first concatenated data packet, where the first concatenated data packet includes N original data packets, N is an integer greater than or equal to 2, and the first concatenated data packet is associated with a first count value; and the transceiver unit (or the sending unit) is configured to send a second concatenated data packet, where the second concatenated data packet is obtained by performing integrity protection and/or encryption on the first concatenated data packet.

In another example, if the second communication apparatus may implement a function of the terminal device, the transceiver unit (or the receiving unit) is configured to receive a second concatenated data packet; and the processing unit is configured to determine a second count value associated with the second concatenated data packet, where the second count value is used for integrity verification and/or decryption of the second concatenated data packet.

In still another example, the communication apparatus includes: a processor, coupled to a memory and configured to execute an instruction in the memory, to implement the method performed by the terminal device in either of the first aspect and the second aspect. Optionally, the communication apparatus further includes other components, for example, an antenna, an input/output module, and an interface. The components may be hardware, software, or a combination of software and hardware.

According to a fourth aspect, a communication apparatus is provided. The communication apparatus may be the network device according to either of the first aspect and the second aspect (a first communication apparatus may implement a function of a terminal device, and a second communication apparatus may implement a function of the network device; or a second communication apparatus may implement a function of a terminal device, and a first communication apparatus may implement a function of the network device). The communication apparatus has a function of the foregoing network device. The network device is, for example, a base station, or a baseband apparatus in a base station. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the related descriptions in the third aspect.

For example, if the second communication apparatus implements the function of the terminal device, and the first communication apparatus implements the function of the network device, the processing unit is configured to obtain a first concatenated data packet, where the first concatenated data packet includes N original data packets, N is an integer greater than or equal to 2, and the first concatenated data packet is associated with a first count value; and the transceiver unit (or the sending unit) is configured to send a second concatenated data packet, where the second concatenated data packet is obtained by performing integrity protection and/or encryption on the first concatenated data packet.

In another example, if the first communication apparatus implements the function of the terminal device, and the second communication apparatus implements the function of the network device, the transceiver unit (or the receiving unit) is configured to receive a second concatenated data packet; and the processing unit is configured to determine a second count value associated with the second concatenated data packet, where the second count value is used for integrity verification and/or decryption of the second concatenated data packet.

In still another example, the communication apparatus includes: a processor, coupled to a memory and configured to execute an instruction in the memory, to implement the method performed by the network device in either of the first aspect and the second aspect. Optionally, the communication apparatus further includes other components, for example, an antenna, an input/output module, and an interface. The components may be hardware, software, or a combination of software and hardware.

According to a fifth aspect, a computer-readable storage medium is provided. The computer-readable storage medium is configured to store a computer program or an instruction. When the computer program or the instruction is run, the method performed by the terminal device or the network device in the foregoing aspects is implemented.

According to a sixth aspect, a computer program product including an instruction is provided. When the computer program product is run on a computer, the methods according to the foregoing aspects are implemented.

### BRIEF DESCRIPTION OF DRAWINGS

FIG. 1 is a schematic diagram of a MAC subPDU;
FIG. 2 is a schematic diagram of a MAC PDU;
FIG. 3 is a schematic diagram of a communication system according to an embodiment of this application;
FIG. 4A is a schematic diagram of an application scenario according to an embodiment of this application;
FIG. 4B is a schematic diagram of another application scenario according to an embodiment of this application;
FIG. 4C is a schematic diagram of still another application scenario according to an embodiment of this application;
FIG. 5A is a flowchart of a communication method according to an embodiment of this application;
FIG. 5B is another flowchart of a communication method according to an embodiment of this application;
FIG. 6A to FIG. 6D are schematic diagrams of several formats of concatenated data packets when a PDCP layer performs concatenation according to an embodiment of this application;
FIG. 7A and FIG. 7B are two schematic diagrams of adding first indication information to a concatenated data packet according to an embodiment of this application;
FIG. 8A and FIG. 8B are two schematic diagrams of adding second indication information to a concatenated data packet according to an embodiment of this application;
FIG. 9A is a schematic diagram of encrypting and decrypting a concatenated data packet according to an embodiment of this application;
FIG. 9B is a schematic diagram of performing integrity protection and integrity protection verification on a concatenated data packet according to an embodiment of this application;
FIG. 10A to FIG. 10D are several schematic diagrams of compressing a concatenated data packet according to an embodiment of this application;
FIG. 11 is a schematic diagram of a UDC technology;
FIG. 12 is a schematic block diagram of a communication apparatus according to an embodiment of this application;
FIG. 13 is a schematic block diagram of a terminal device according to an embodiment of this application; and
FIG. 14 is a schematic block diagram of a network device according to an embodiment of this application.

### DESCRIPTION OF EMBODIMENTS

To make objectives, technical solution, and advantages of embodiments of this application clearer, the following further describes embodiments of this application in detail with reference to the accompanying drawings.

A technology provided in embodiments of this application may be applied to a communication system 10 shown in FIG. 3. The communication system 10 includes one or more communication apparatuses 30 (for example, a terminal device). The one or more communication apparatuses 30 are connected to one or more core network devices by using one or more access network devices 20, to implement communication between a plurality of communication devices. For example, the communication system may support a communication system of a 2G, 3G, 4G, or 5G (also referred to as new radio (new radio, NR)) access technology, a wireless fidelity (wireless fidelity, Wi-Fi) system, a cellular system related to the 3rd Generation Partnership Project (3rd generation partnership project, 3GPP), a communication system that supports convergence of a plurality of radio technologies, or a future-oriented evolution system.

The following describes some terms in embodiments of this application, to facilitate understanding of a person skilled in the art.

In embodiments of this application, the terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a circuit system) built in the foregoing device. The terminal device is configured to connect people, things, machines, and the like, and may be widely used in various scenarios, for example, including but not limited to the following scenarios: cellular communication, device-to-device communication (device-to-device, D2D), vehicle to everything (vehicle to everything, V2X), machine-to-machine/machine type communications (machine-to-machine /machine-type communications, M2M/MTC), Internet of Things (Internet of Things, IoT), virtual reality (virtual reality, VR), augmented reality (augmented reality, AR), industrial control (industrial control), and self-driving (self-driving), remote medical (remote medical), smart grid (smart grid), smart furniture, smart office, smart wearables, smart transportation, smart city (smart city), unmanned aerial vehicles, and robots. The terminal device may be sometimes referred to as a user equipment (user equipment, LTE), a terminal, an access station, a UE station, a remote station, a wireless communication device, a user apparatus, or the like. For the convenience of description, in embodiments of this application, an example in which the terminal device is a LTE is used for description.

The network device in embodiments of this application includes, for example, an access network device and/or a core network device. The access network device is a device having a wireless transceiver function, and is configured to communicate with the terminal device. The access network device includes but is not limited to a base transceiver station (BTS), a NodeB (NodeB), an evolved NodeB (eNodeB/eNB, or gNodeB/gNB), or a transmission reception point (transmission reception point, TRP) in the foregoing communication system, a base station evolved after the 3rd Generation Partnership Project (3rd generation partnership project, 3GPP), an access node in a Wireless Fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support the foregoing networks using a same access technology, or may support the foregoing networks using different access technologies. The base station may include one or more co-site or non-co-site transmission reception points. The network device may alternatively be a radio controller, a central unit (central unit, CU), and/or a distributed unit (distributed unit, DU) in a cloud radio access network (cloud radio access network, CRAN) scenario. The network device may alternatively be a server, a wearable device, a vehicle-mounted device, or the like. For example, a network device in a vehicle-to-everything (vehicle to everything, V2X) technology may be a road side unit (road side unit, RSU). The following provides descriptions by using an example in which the access network device is a base station. A plurality of network devices in the communication system may be base stations of a same type, or may be base stations of different types. The base station may communicate with a terminal device, or may communicate with a terminal device via a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a user plane function (user plane function, UPF), or the like. In embodiments of this application, the communication apparatus configured to implement a function of the network device may be a network device, or may be an apparatus that can support the network device in implementing the function, for example, a circuit system. The apparatus may be installed in the network device. In the technical solutions provided in embodiments of this application, the technical solutions provided in embodiments of this application are described by using an example in which the apparatus configured to implement the function of the network device is the network device.

In the following, unless otherwise specified, the "network device" is, for example, an "access network device".

In embodiments of this application, unless otherwise specified, a quantity of nouns represents "a singular noun or a plural noun", namely, "one or more". "At least one" means one or more, and "a plurality of" means two or more. "And/Or" is an association relationship for describing associated objects, and indicates that three relationships may exist. For example, A and/or B may indicate the following cases: Only A exists, both A and B exist, and only B exists, where A and B may be in a singular form or a plural form. The character "/" generally indicates an "or" relationship between the associated objects. For example, A/B indicates A or B. "At least one of the following items (pieces)" or similar expressions refer to any combination of the items, including any combination of singular items (pieces) or plural items (pieces). For example, at least one item (piece) of a, b, or c may represent: a, b, c, a and b, a and c, b and c, or a, b, and c. Herein, a, b, and c may be singular or plural.

Ordinal numerals such as "first" and "second" in embodiments of this application are used to distinguish between a plurality of objects, and are not intended to limit a size, content, a sequence, a time sequence, an application scenario, priorities, or importance of the plurality of objects. For example, a first count value and a second count value may be a same count value, or may be different count values. In addition, such names do not indicate that values, priorities, application scenarios, importance degrees, or the like of the two count values are different.

A supported peak rate required by a 5G system is increasingly high. For example, a maximum peak rate currently supported is 10 Gbps, and may evolve to 20 Gbps in the future. For a Transmission Control Protocol (transmission control protocol, TCP) connection, after receiving downlink data, a LTE sends a corresponding TCP acknowledgment (ACK) to a base station. Therefore, when a downlink rate is a peak rate, a large quantity of TCP ACK packets are generated in uplink. For the Internet Protocol version 4 (internet protocol version 4, IPv4), a length of a TCP ACK is 52 bytes. For the Internet Protocol version 6 (internet protocol version 6, IPv6), a length of a TCP ACK is 72 bytes.

Using an example in which a downlink peak rate is 10 Gbps and a maximum transmission unit (maximum transmission unit, MTU) is 1500 bytes, it is assumed that every two downlink data packets correspond to one TCP ACK in the uplink. In this case, 416 TCP ACKs are generated in the uplink per millisecond averagely. A plurality of uplink TCP ACKs may be accumulated in one slot (slot) for sending. Therefore, a large quantity of TCP ACK packets need to be packed into one transport block (transport block, TB) for sending. From another perspective, if one TB includes only TCP ACKs, and an example in which a TB size (size) is 1280 Kbit is used, a quantity of TCP ACKs included in one TB is 1280 Kbit/((9+40)*8) = 3265.

Each TCP ACK can be used as an SDAP SDU. Currently, when processing an SDAP SDU, L2 needs to add an SDAP header, a PDCP header, an RLC header, and a MAC subheader before each SDAP SDU before forming a MAC subPDU. Particularly, in the foregoing listed scenario in which a large quantity of packets are generated, overheads of the UE or the base station during packet assembly processing are high. Certainly, the foregoing listed scenario is only one scenario. In another scenario, a problem of high overheads still exists in the current packet assembly manner. In view of this, the technical solutions in embodiments of this application are provided. This embodiment of this application proposes a concept of a concatenated data packet. Because of being a concatenated data packet, the N original data packets included in the first concatenated data packet may share one set of headers, and the original data packets do not need to have their respective headers. Therefore, overheads during packet assembly can be reduced, and transmission resources can be saved. In addition, in this embodiment of this application, the first concatenated data packet can be associated with the first count value, so that the first concatenated data packet can also have a corresponding count value like the original data packet, and both a transmit end and a receive end of the second concatenated data packet can perform processing such as ordering or retransmission on the second concatenated data packet based on the first count value.

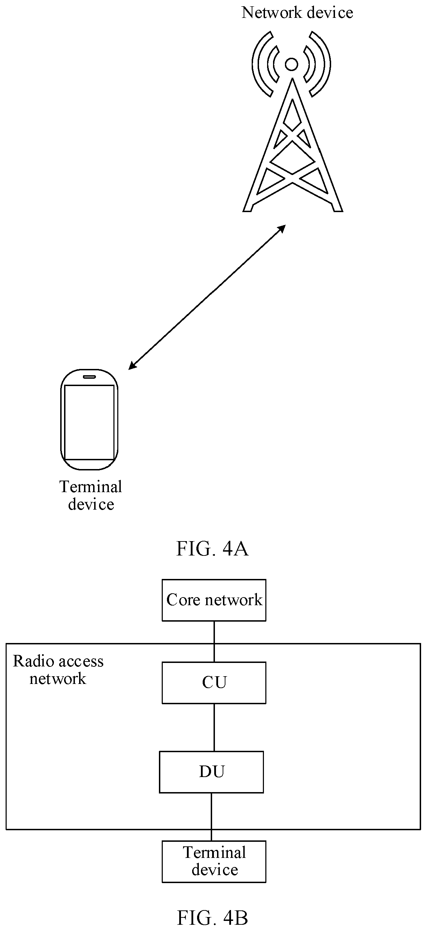

FIG. 4A shows a communication network architecture in a communication system 10 according to an embodiment of this application. All subsequently provided embodiments are applicable to the architecture. A network device included in FIG. 4A is, for example, an access network device 20 included in the communication system 10, and a terminal device included in FIG. 4A is, for example, a communication apparatus 30 included in the communication system 10. The network device can communicate with the terminal device.

FIG. 4B shows another communication network architecture in a communication system 10 according to an embodiment of this application. As shown in FIG. 4B, the communication system includes a core network (core network, CN) and a radio access network (radio access network, RAN). A network device (for example, a base station) in the RAN is, for example, an access network device 20 in the communication system 10. The network device in the RAN includes a baseband apparatus and a radio frequency apparatus. The baseband apparatus may be implemented by one or more nodes. The radio frequency apparatus may be deployed remotely from the baseband apparatus and implemented independently, may be integrated into the baseband apparatus, or may be partially deployed remotely and partially integrated into the baseband apparatus. The network device in the RAN may include a CU and a DU. If there are a plurality of DUs, the plurality of DUs may be controlled by one CU in a centralized manner. The CU and the DU may be divided based on their respective protocol layer functions of a wireless network. For example, functions of a packet data convergence protocol (packet data convergence protocol, PDCP) layer and higher protocol layers are set on the CU, and functions of protocol layers below the PDCP layer, such as a radio link control (radio link control, RLC) layer and a media access control (media access control, MAC) layer, are set on the DU. It should be noted that such protocol layer division is merely an example, and there may alternatively be another protocol layer division. The radio frequency apparatus may be deployed remotely and not placed in the DU, may be integrated into the DU, or may be partially deployed remotely and partially integrated into the DU. This is not limited in this embodiment of this application.

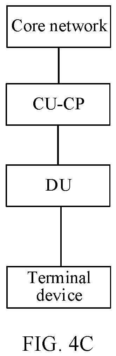

FIG. 4C shows another communication network architecture in a communication system 10 according to an embodiment of this application. Compared with the architecture shown in FIG. 4B, a control plane (control panel, CP) and a user plane (user panel, UP) of the CU may alternatively be separated into different entities for implementation. The different entities are a control plane CU entity (CU-CP entity) and a user plane CU entity (CU-UP entity). In the foregoing network architecture, signaling generated by the CU may be sent to a terminal device by using the DU, or signaling generated by a terminal device may be sent to the CU by using the DU. The DU may transparently transmit the signaling to the terminal device or the CU by directly encapsulating the signaling at a protocol layer without parsing the signaling. In the network architecture, the CU is classified as a network device on a RAN side. In addition, the CU may also be classified as a network device on a CN side. This is not limited in this embodiment of this application.

The following describes methods provided in embodiments of this application with reference to the accompanying drawings. In the accompanying drawings corresponding to embodiments of this application, all steps represented by dashed lines are optional steps. Embodiments of this application are performed by, for example, a first communication apparatus and a second communication apparatus. The first communication apparatus is a network device, and the second communication apparatus is a UE; or the first communication apparatus is a UE, and the second communication apparatus is a network device. Optionally, if a scenario such as cell handover is involved, embodiments of this application may further relate to a third communication apparatus. During uplink transmission, the first communication apparatus is a data packet transmit end, both the second communication apparatus and the third communication apparatus are data packet receive ends, the first communication apparatus is, for example, a UE, and the second communication apparatus and the third communication apparatus are, for example, network devices. For example, the second communication apparatus is a network device accessed by the UE before cell handover, and the third communication apparatus is a network device accessed by the LTE after cell handover. During downlink transmission, both the first communication apparatus and the third communication apparatus are data packet transmit ends, the second communication apparatus is a data packet receive end, both the first communication apparatus and the third communication apparatus are network devices, and the second communication apparatus is a LTE. For example, the first communication apparatus is a network device accessed by the UE before cell handover, and the third communication apparatus is a network device accessed by the UE after cell handover. In embodiments of this application, for example, a network device accessed by the UE before cell handover is referred to as a first network device, and a network device accessed by the UE after cell handover is referred to as a second network device.

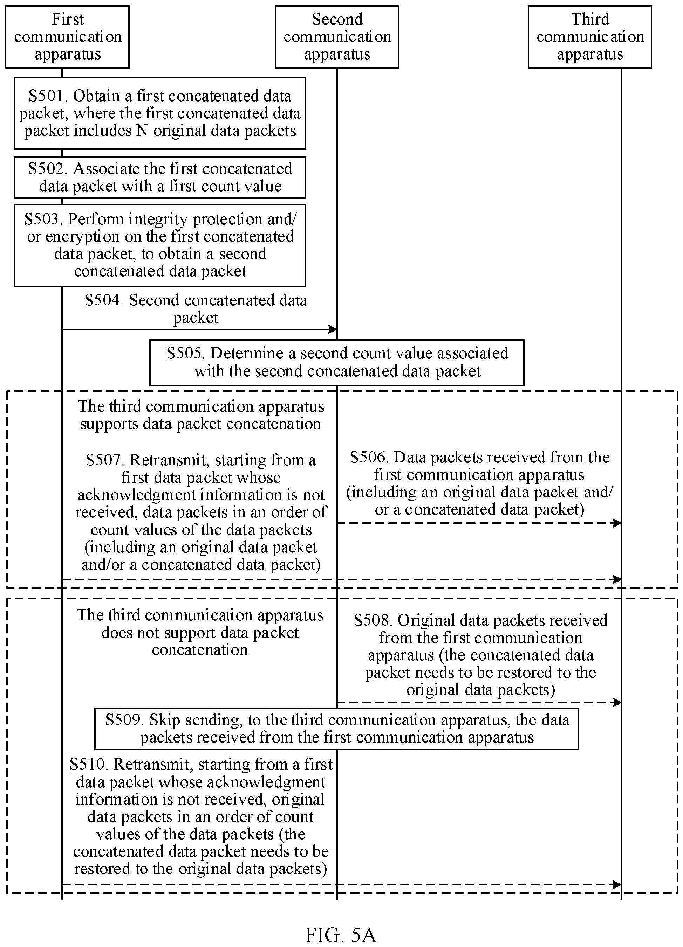

FIG. 5A is a flowchart of a communication method according to an embodiment of this application. S501. A first communication apparatus obtains a first concatenated data packet. For example, the first concatenated data packet includes N original data packets, and N is an integer greater than or equal to 2.

In this embodiment of this application, the data packet concatenation function may be implemented at a PDCP layer, or the data packet concatenation function may be implemented at another protocol layer. This is not limited in this embodiment of this application. In this embodiment of this application, an example in which the data packet concatenation function is implemented at the PDCP layer is used.

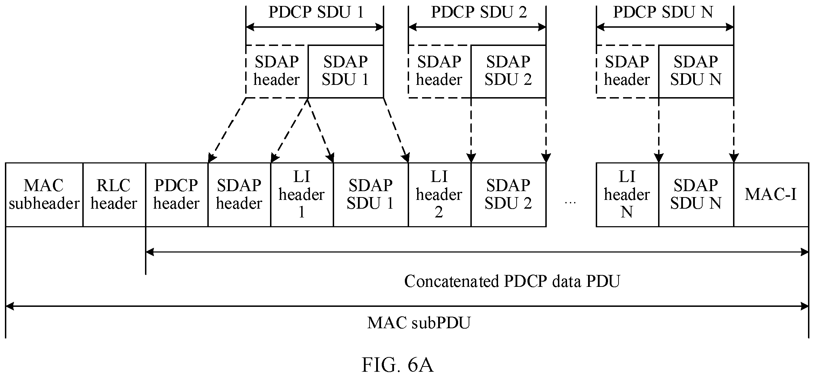

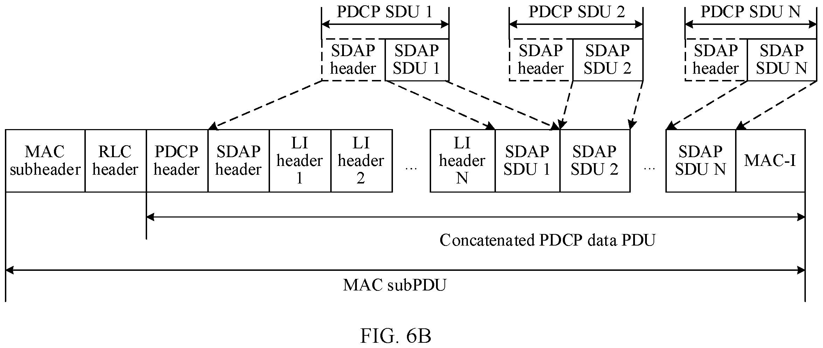

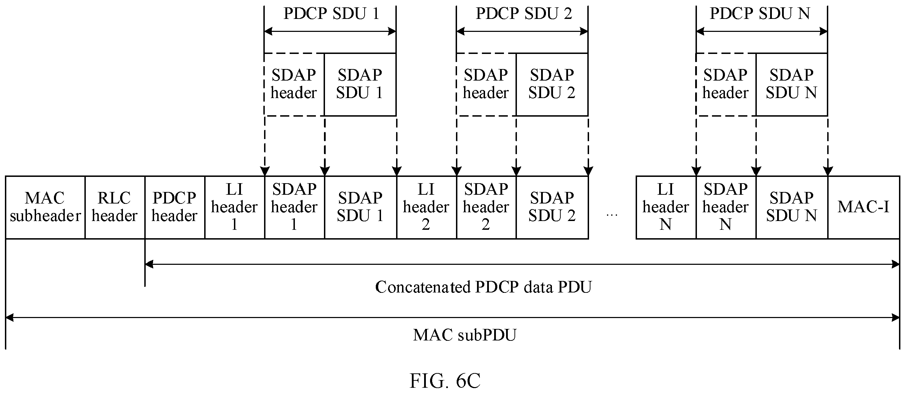

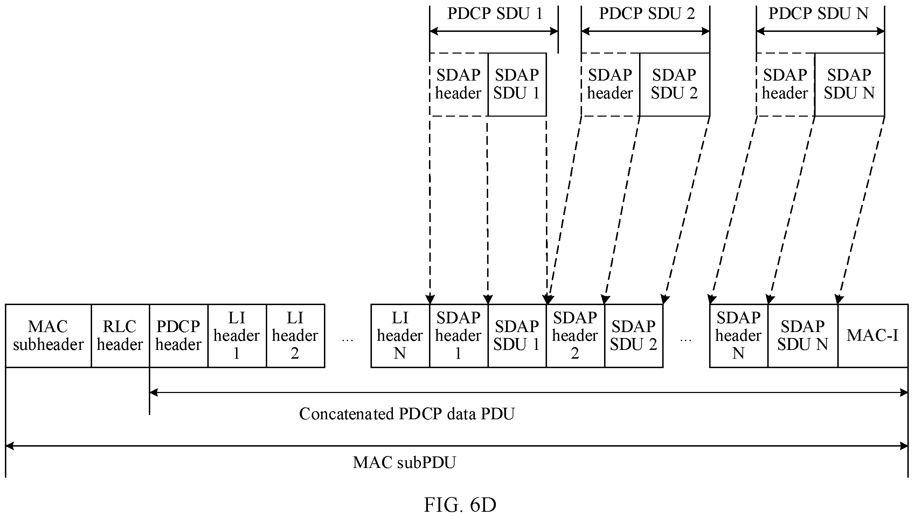

If the data packet concatenation function is implemented at the PDCP layer, a sending PDCP entity of the first communication apparatus receives a PDCP SDU from an upper layer, where one PDCP SDU includes, for example, an SDAP SDU and a corresponding SDAP header. The sending PDCP entity may concatenate a plurality of PDCP SDUs to obtain a concatenated (concatenated) PDCP SDU. For example, the first concatenated data packet is a concatenated PDCP SDU. The concatenated PDCP SDU includes, for example, N PDCP SDUs, and the N PDCP SDUs are considered as N original data packets. The upper layer of the PDCP layer is, for example, an SDAP layer. The sending PDCP entity then performs corresponding processing on the concatenated PDCP SDU, for example, performs corresponding processing such as integrity protection and/or encryption on the concatenated PDCP SDU, to obtain a concatenated PDCP data PDU. For example, the concatenated PDCP data PDU obtained based on the first concatenated data packet is referred to as a second concatenated data packet. The sending PDCP entity may obtain the concatenated PDCP data PDU after performing integrity protection and/or encryption on the concatenated PDCP SDU, or in addition to integrity protection and/or encryption, the sending PDCP entity performs some other processing on the concatenated PDCP SDU, and then obtains the concatenated PDCP data PDU. The other processing includes, for example, adding a PDCP header to the concatenated PDCP SDU. The sending PDCP entity sends (or delivers) the concatenated PDCP data PDU to a lower layer of the PDCP layer, for example, an RLC layer. The RLC layer may perform corresponding processing on the concatenated PDCP data PDU, for example, add an RLC header to the concatenated PDCP data PDU, and the RLC layer may deliver the processed concatenated PDCP data PDU to a lower layer of the RLC layer, for example, a MAC layer. The MAC layer may perform corresponding processing on the concatenated PDCP data PDU, for example, add a MAC header to the concatenated PDCP data PDU, to obtain a MAC subPDU. For this, refer to FIG. 6A, FIG. 6B, FIG. 6C, or FIG. 6D. In FIG. 6A, an example in which a length indicator (length indicator, LI) header corresponding to each SDAP SDU is placed before the SDAP SDU is used. In FIG. 6B, an example in which LI headers corresponding to all SDAP SDUs are placed before a first SDAP SDU is used. To be specific, all SDAP SDUs included in a concatenated PDCP data PDU (or a concatenated PDCP SDU) still have their respective corresponding LI headers. However, the LI headers are all placed in front instead of being placed before the corresponding SDAP SDUs in an interleaved manner. In FIG. 6A and FIG. 6B, all the SDAP SDUs included in the concatenated PDCP data PDU (or the concatenated PDCP SDU) share one SDAP header. However, in FIG. 6C and FIG. 6D, each SDAP SDU included in a concatenated PDCP data PDU (or a concatenated PDCP SDU) corresponds to one SDAP header. In other words, an SDAP header may be set for each SDAP SDU individually, or may be set for all SDAP SDUs collectively. In addition, in FIG. 6C, an example in which an LI header of each PDCP SDU is placed before the PDCP SDU is used. In FIG. 6D, an example in which LI headers of all PDCP SDUs are placed before a first PDCP SDU is used.

The concatenated PDCP data PDU (or the concatenated PDCP SDU) may share (or use together) a first header. In other words, only one first header needs to be set for all PDCP SDUs included in the concatenated PDCP data PDU, and there is no need to set a first header for each PDCP SDU included in the concatenated PDCP data PDU, thereby reducing packet assembly overheads. The first header includes, for example, one or more of an SDAP header, a PDCP header, an RLC header, or a MAC subheader, or the first header may further include another header. For example, for FIG. 6A or FIG. 6B, the first header may include an SDAP header, a PDCP header, an RLC header, and a MAC subheader. For FIG. 6C or FIG. 6D, the first header may include a PDCP header, an RLC header, and a MAC subheader.

It can be learned that although the concatenated data packet includes a plurality of original data packets, each original data packet does not have its own first header, but all the original data packets included in the concatenated data packet share the first header. In this way, a quantity of headers of the concatenated data packet is reduced, thereby reducing packet assembly overheads and saving transmission resources. In conclusion, "concatenation" is to add a plurality of original data packets to one data packet (for example, referred to as a concatenated data packet). In the concatenated data packet, the plurality of original data packets share one (or one set of) first header(s), or a quantity of first headers included in the concatenated data packet is less than N, where N is a quantity of original data packets included in the concatenated data packet. For example, one original data packet includes one first header. For content included in the first header, refer to the foregoing description. Therefore, a quantity of headers is reduced through concatenation, thereby reducing packet assembly overheads.

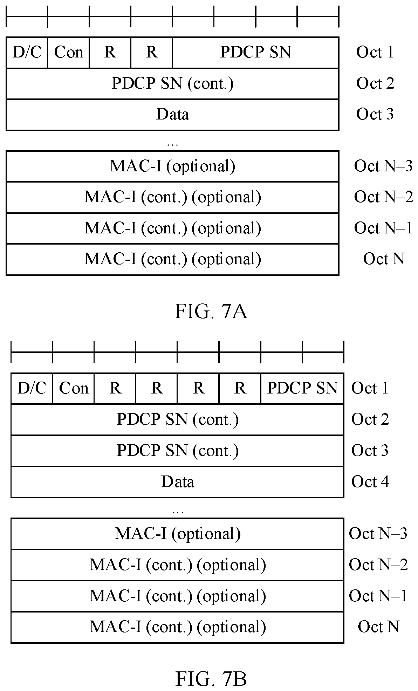

The data packet in this embodiment of this application includes an original data packet and also includes a concatenated data packet. To enable a receive end to identify whether a received data packet is an original data packet or a concatenated data packet, optionally, if the data packet concatenation function is implemented at the PDCP layer, first indication information may be added to the PDCP header. The first indication information may indicate whether a data packet in which the first indication information is located is a concatenated data packet. Alternatively, the first indication information may not be added to the PDCP header, but is added to another header included in the first header. In this embodiment of this application, an example in which the first indication information is added to the PDCP header is used. For example, if the PDCP header included in the first header of the second concatenated data packet includes the first indication information, the first indication information may indicate whether the second concatenated data packet is a concatenated data packet. For example, the first indication information is implemented by using a Con field. As shown in FIG. 7A or FIG. 7B, the Con field is added to a PDCP header, and the Con field may occupy one or more bits (bit). For example, an indication manner of the Con field is as follows: If a value of the Con field is "0", it indicates that the data packet is not a concatenated data packet, or it indicates that the data packet is an original data packet; but if a value of the Con field is " 1", it indicates that the data packet is a concatenated data packet. In FIG. 7A, an example in which a length of a PDCP sequence number (sequence number, SN) included in the PDCP header is 12 bits is used. In FIG. 7B, an example in which a length of a PDCP SN included in the PDCP header is 18 bits is used. In addition, in FIG. 7A and FIG. 7B, Oct represents octal, D/C represents a data PDU (data PDU)/control PDU (control PDU), R represents reserved (reserved), and cont. represents continue (continue). When a field occupies a plurality of bytes, the cont. may be used to distinguish parts of a same field in different bytes.

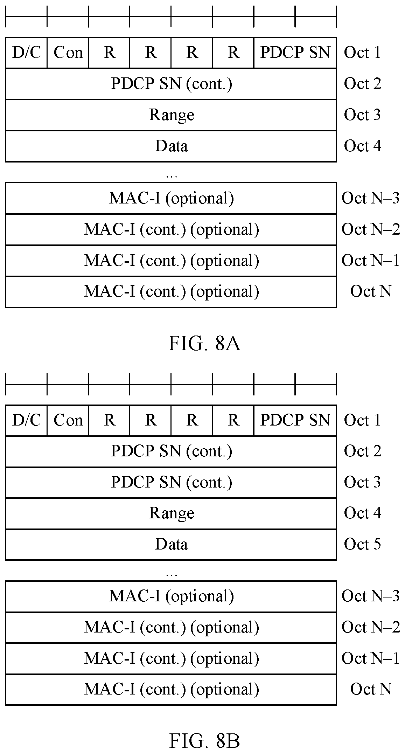

Because one concatenated data packet may include a plurality of original data packets, to enable a receive end of the concatenated data packet to more quickly determine a quantity of original data packets included in the concatenated data packet, optionally, second indication information may be further added to a first header of the concatenated data packet. The second indication information may indicate a quantity of original data packets included in the concatenated data packet in which the first indication information is located. Optionally, if the data packet concatenation function is implemented at the PDCP layer, the second indication information may be added to the PDCP header. Alternatively, the second indication information may not be added to the PDCP header, but is added to another header included in the first header. In this embodiment of this application, an example in which the second indication information is added to the PDCP header is used. For example, the second indication information exists only when the first indication information indicates that the data packet is a concatenated data packet. If the first indication information indicates that the data packet is not a concatenated data packet, the second indication information does not exist. In other words, the first header may not include the second indication information. In another example, regardless of whether the first indication information indicates that the data packet is a concatenated data packet or an original data packet, the second indication information exists. If the first indication information indicates that the data packet is a concatenated data packet, the quantity indicated by the second indication information is greater than or equal to 2. However, if the first indication information indicates that the data packet is not a concatenated data packet, the quantity indicated by the second indication information is 0 or 1. For example, the second indication information is implemented by using a "Range" field. As shown in FIG. 8A or FIG. 8B, the Range field is added to a PDCP header, and the Range field may occupy one or more bits. In FIG. 8A, an example in which a length of a PDCP SN included in the PDCP header is 12 bits is used. In FIG. 8B, an example in which a length of a PDCP SN included in the PDCP header is 18 bits is used.

That the first communication apparatus can concatenate data packets is equivalent to enabling (or initiating or activating) the data packet concatenation function, which is considered as a capability of the first communication apparatus. Optionally, if the first communication apparatus is a UE, and the second communication apparatus is a network device (or if a cell handover scenario is involved, the second communication apparatus is a first network device), the LTE may send second capability information to the network device, where the second capability information indicates a capability of the UE, and the second capability information may indicate whether the UE supports the data packet concatenation function. Therefore, after receiving the second capability information, the network device can determine whether the UE supports the data packet concatenation function. The second capability information may indicate whether the UE supports the data packet concatenation function. If the UE supports the data packet concatenation function, it indicates that each data radio bearer (data radio bearer, DRB) of the UE supports the data packet concatenation function. However, if the UE does not support the data packet concatenation function, it indicates that no DRB of the UE supports the data packet concatenation function. Alternatively, the second capability information may indicate whether one or more DRBs of the UE support the data packet concatenation function.

Optionally, the network device may send enabling information to the UE, where the enabling information may indicate to enable (or activate) the data packet concatenation function, or indicate to disable (or inactivate) the data packet concatenation function. For example, if the enabling information indicates that the data packet concatenation function is enabled, it indicates that the data packet concatenation function is enabled for each DRB of the LTE, or the enabling information may indicate the UE to enable the data packet concatenation function for one or more DRBs. In another example, if the enabling information indicates that the data packet concatenation function is disabled, it indicates that the data packet concatenation function is disabled for each DRB of the LTE, or the enabling information may indicate the LTE to disable the data packet concatenation function for one or more DRBs, but the enabling information does not indicate whether the data packet concatenation function is enabled for another DRB of the UE. After the UE receives the enabling information, if the enabling information indicates to enable the data packet concatenation function, the UE may enable the data packet concatenation function for each DRB. However, if the enabling information indicates to enable the data packet concatenation function for one or more DRBs, the UE enables the data packet concatenation function for the DRBs, but does not respond to another DRB different from the DRBs. For example, if the data packet concatenation function is originally enabled for the another DRB, the data packet concatenation function continues to be maintained. However, if the data packet concatenation function is disabled for the another DRB, the data packet concatenation function of the DRBs is disabled. Alternatively, if the enabling information indicates to disable the data packet concatenation function, the UE may disable the data packet concatenation function for each DRB. However, if the enabling information indicates to disable the data packet concatenation function for one or more DRBs, the UE disables the data packet concatenation function for the DRBs, but does not respond to another DRB different from the DRBs. For example, if the data packet concatenation function is originally enabled for the another DRB, the data packet concatenation function continues to be maintained. However, if the data packet concatenation function is disabled for the another DRB, the data packet concatenation function of the DRBs is disabled.

If the first communication apparatus is a network device (or if a cell handover scenario is involved, the first communication apparatus is a first network device), and the second communication apparatus is a UE, because the UE also needs to receive and identify a concatenated data packet and the UE also needs to use the data packet concatenation function if the network device enables the data packet concatenation function, the LTE may also send capability information to the network device to indicate whether the LTE supports the data packet concatenation function. This implementation is similar to the foregoing manner. In another optional manner, even if the UE does not send the second capability information to the network device, the network device may send enabling information to the UE, to indicate to enable or disable the data packet concatenation function. In other words, that the UE sends the second capability information to the network device is only an optional process.

When data packets are concatenated, there may be an extreme length of the concatenation, or any plurality of original data packets cannot be always concatenated into one concatenated data packet. If a concatenated data packet is excessively long, a problem such as network congestion may occur. In addition, a capability of the UE may be limited, and some UEs cannot support an excessively long concatenated data packet. Therefore, optionally, the LTE may send first capability information to the network device (or to the first network device if a cell handover scenario is involved), and the first capability information may indicate a maximum length of a concatenated data packet that can be supported by the UE. The first capability information may indicate a maximum length of a concatenated data packet that can be supported by the UE, and the maximum length is applicable to all DRBs of the UE; or the first capability information may indicate a maximum length of a concatenated data packet that can be supported by one or more DRBs of the UE.

Optionally, the network device may send the second message to the UE, where the second message may indicate the second threshold, and the second threshold is, for example, an allowed maximum length of the concatenated data packet. To be specific, the length of the concatenated data packet needs to be less than or equal to the second threshold. The second threshold is applicable to all DRBs of the UE, or the second threshold is applicable to some DRBs of the UE. If the UE sends the first capability information to the network device, the second threshold may be determined based on a maximum length of a concatenated data packet that can be supported by the UE. For example, the second threshold is less than or equal to the maximum length of the concatenated data packet that can be supported by the UE. Certainly, when determining the second threshold, in addition to the maximum length of the concatenated data packet that can be supported by the UE, the network device may consider other factors, for example, may further consider a maximum length of a concatenated data packet that can be supported by the network device, or may further consider a network bandwidth. This is not specifically limited. If the first communication apparatus is a LTE and the second communication apparatus is a network device, a length of an uplink concatenated data packet sent by the UE is less than or equal to the second threshold. However, if the first communication apparatus is a network device and the second communication apparatus is a UE, a length of a downlink concatenated data packet sent by the network device is also less than or equal to the second threshold. In another optional manner, even if the UE does not send the second capability information to the network device, the network device may send the second threshold to the UE. In other words, that the UE sends the second capability information to the network device is only an optional process.

If the UE sends both the first capability information and the second capability information to the network device, the first capability information and the second capability information may be carried in one message. The message is, for example, a LTE capability information (LTE capability information) message. For example, the first capability information and the second capability information may be included in the capability information of the UE. Alternatively, the first capability information and the second capability information may be carried in different messages and sent to the network device.

An example in which the UE sends the first capability information and the second capability information to the network device is used. Through the foregoing process, the LTE and the network device can determine, through negotiation, whether to enable the data packet concatenation function, and can also determine, through negotiation, an allowed maximum length of a concatenated data packet, so that a data packet concatenation process can be performed within a capability range of the UE. Alternatively, whether the UE enables the data packet concatenation function may be determined in another manner, for example, specified in a protocol; and the second threshold may be determined in another manner, for example, specified in a protocol.

In addition, if an original data packet is excessively long, a transmission gain that can be obtained if the original data packet is concatenated is not large, and even overheads are higher. Therefore, in this embodiment of this application, it is considered that an excessively long original data packet is not suitable for concatenation. Therefore, optionally, the network device (or the first network device if a cell handover scenario is involved) may send the first threshold to the UE, where the first threshold is used to determine whether the original data packet participates in concatenation. For example, if a length of an original data packet is greater than the first threshold, the original data packet does not participate in concatenation. However, if a length of an original data packet is less than or equal to the first threshold, the original data packet can participate in concatenation. The first threshold is applicable to both an uplink data packet and a downlink data packet, or the first threshold is applicable to an uplink data packet. For a downlink data packet, the network device performs determination by using a third threshold. For example, the first threshold is also carried in the first message, or the first threshold may be sent by using another message. It may be understood that the network device can send one or more of the enabling information, the second threshold, or the first threshold to the LTE. The three items may be carried in one message (for example, be all carried in the first message), or may be sent by using different messages (for example, the second threshold is sent by using the second message, the enabling information is sent by using a third message, and the first threshold is sent by using the first message). Alternatively, any two items may be carried in one message and sent (for example, the second threshold and the first threshold are sent by using the first message, and the enabling information is sent by using the second message). Alternatively, the first threshold may be determined in another manner, for example, specified in a protocol. The first message is, for example, a radio resource control (radio resource control, RRC) message, a MAC control element (control element, CE), or downlink control information (downlink control information, DCI). An implementation of the second message or the third message is similar. In addition, the three messages may be messages of a same type, for example, RRC messages, or may be messages of different types. For example, the first communication apparatus determines to enable the data packet concatenation function, and the first communication apparatus has determined the second threshold and the first threshold. The following describes a process in which the first communication apparatus obtains the first concatenated data packet. The first communication apparatus is, for example, a UE or a network device (or if a cell handover scenario is involved, the first communication apparatus is a first network device).

For example, if the sending PDCP entity of the first communication apparatus obtains the first original data packet from an upper layer, the sending PDCP entity may determine whether the first length is less than or equal to the first threshold, where the first length is a length of the first original data packet. If the first length is greater than the first threshold, the sending PDCP entity does not concatenate the first original data packet. In this case, if the sending PDCP entity has no data packet that is being concatenated, the sending PDCP entity processes the first original data packet in a normal manner, for example, associates the first original data packet with a count value. If the sending PDCP entity has a data packet (for example, referred to as a third concatenated data packet) that is being concatenated, regardless of whether a length of the third concatenated data packet reaches the second threshold, the sending PDCP entity ends concatenation of the third concatenated data packet. To be specific, concatenation of the third concatenated data packet is completed. For example, the third concatenated data packet whose concatenation is completed is the first concatenated data packet, and the sending PDCP entity processes the first original data packet in a normal manner, for example, associates the first original data packet with a count value. Alternatively, if the first length is less than or equal to the first threshold, the sending PDCP entity may obtain a third concatenated data packet based on the first original data packet if the sending PDCP entity currently has no data packet that is being concatenated. In this case, the third concatenated data packet includes the first original data packet. However, if the sending PDCP entity currently has a data packet (for example, a third concatenated data packet) that is being concatenated, the sending PDCP entity may determine whether a sum of the first length and a second length is greater than the second threshold, where the second length is a current length of the third concatenated data packet. If the sum of the first length and the second length is greater than the second threshold, the sending PDCP entity determines that concatenation of the third concatenated data packet is completed. For example, the third concatenated data packet whose concatenation is completed is the first concatenated data packet. The sending PDCP entity may process the first original data packet as an original data packet without performing concatenation, or the sending PDCP entity may obtain a next concatenated data packet based on the first original data packet. However, if the sum of the first length and the second length is less than or equal to the second threshold, the sending PDCP entity may add the first original data packet to the third concatenated data packet. After the first original data packet is added to the third concatenated data packet, if the length of the third concatenated data packet is equal to the second threshold, the concatenation may be stopped. For example, the third concatenated data packet whose concatenation is completed is the first concatenated data packet. However, if the length of the third concatenated data packet is less than the second threshold, arrival of a next original data packet may continue to be waited. Alternatively, after the first original data packet is added to the third concatenated data packet, a relationship between the length of the third concatenated data packet and the second threshold may not be determined temporarily, but is determined after a next original data packet arrives. Through the foregoing process, the sending PDCP entity of the first communication apparatus can obtain the concatenated data packet.

In another example, the first communication apparatus determines to enable the data packet concatenation function, and the first communication apparatus has determined the second threshold but has not determined the first threshold (for example, neither a network device nor a protocol configures the first threshold). The following describes a process in which the first communication apparatus obtains the first concatenated data packet. The first communication apparatus is, for example, a UE or a network device (or if a cell handover scenario is involved, the first communication apparatus is a first network device).

For example, the sending PDCP entity of the first communication apparatus obtains the first original data packet from an upper layer. In this case, if the sending PDCP entity has no data packet that is being concatenated, the sending PDCP entity processes the first original data packet in a normal manner, for example, associate the first original data packet with a count value; or if the sending PDCP entity has no data packet that is being concatenated, the sending PDCP entity may obtain a third concatenated data packet based on the first original data packet. In this case, the third concatenated data packet includes the first original data packet. In other words, the sending PDCP entity may start concatenation, and use the first original data packet as the first original data packet included in the third concatenated data packet.

Alternatively, if the sending PDCP entity currently has a data packet (for example, a third concatenated data packet) that is being concatenated, the sending PDCP entity may determine whether a sum of the first length and a second length is greater than the second threshold. If the sum of the first length and the second length is greater than the second threshold, the sending PDCP entity determines that concatenation of the third concatenated data packet is completed. For example, the third concatenated data packet whose concatenation is completed is the first concatenated data packet. The sending PDCP entity may process the first original data packet as an original data packet without performing concatenation, or the sending PDCP entity may obtain a next concatenated data packet based on the first original data packet. However, if the sum of the first length and the second length is less than or equal to the first length, the sending PDCP entity may add the first original data packet to the third concatenated data packet. After the first original data packet is added to the third concatenated data packet, if the length of the third concatenated data packet is equal to the second threshold, the concatenation may be stopped. For example, the third concatenated data packet whose concatenation is completed is the first concatenated data packet. However, if the length of the third concatenated data packet is less than the second threshold, arrival of a next original data packet may continue to be waited. Alternatively, after the first original data packet is added to the third concatenated data packet, a relationship between the length of the third concatenated data packet and the second threshold may not be determined temporarily, but is determined after a next original data packet arrives. Through the foregoing process, the sending PDCP entity of the first communication apparatus can obtain the concatenated data packet.

In still another example, the first communication apparatus determines to enable the data packet concatenation function, and the first communication apparatus has determined the first threshold but has not determined the second threshold (for example, neither a network device nor a protocol configures the second threshold). The following describes a process in which the first communication apparatus obtains the first concatenated data packet. The first communication apparatus is, for example, a UE or a network device (or if a cell handover scenario is involved, the first communication apparatus is a first network device).

For example, if the sending PDCP entity of the first communication apparatus obtains the first original data packet from an upper layer, the sending PDCP entity may determine whether the first length is less than or equal to the first threshold. If the first length is greater than the first threshold, the PDCP entity does not concatenate the first original data packet. In this case, if the sending PDCP entity has no data packet that is being concatenated, the sending PDCP entity processes the first original data packet in a normal manner, for example, associates the first original data packet with a count value. If the sending PDCP entity has a data packet (for example, a third concatenated data packet) that is being concatenated, the sending PDCP entity may end concatenation of the third concatenated data packet. To be specific, concatenation of the third concatenated data packet is completed. For example, the third concatenated data packet whose concatenation is completed is referred to as the first concatenated data packet, and the sending PDCP entity processes the first original data packet in a normal manner, for example, associates the first original data packet with a count value.

Alternatively, if the first length is less than or equal to the first threshold, the sending PDCP entity may obtain a third concatenated data packet based on the first original data packet if the sending PDCP entity currently has no data packet that is being concatenated. In this case, the third concatenated data packet includes the first original data packet. However, if the sending PDCP entity currently has a data packet (for example, a third concatenated data packet) that is being concatenated, the sending PDCP entity may add the first original data packet to the third concatenated data packet. After the first original data packet is added to the third concatenated data packet, the concatenation may be stopped. For example, the third concatenated data packet whose concatenation is completed is referred to as the first concatenated data packet. Alternatively, after the first original data packet is added to the third concatenated data packet, concatenation may not be stopped, but arrival of a next original data packet may continue to be waited. Through the foregoing process, the sending PDCP entity of the first communication apparatus can obtain the concatenated data packet.

S502. The first communication apparatus associates the first concatenated data packet with a first count value. For example, this step is completed by the sending PDCP entity of the first communication apparatus. S502 may be performed before S501, S502 may be performed after S501, or S502 and S501 may be performed simultaneously.

In this embodiment of this application, the count value may also be referred to as a number, for example, a count (count) value. A data packet may correspond to an SN (for example, a PDCP SN) and a hyper frame number (hyper frame number, HFN). A PDCP SN and an HFN that correspond to a data packet are combined to form a count value of the data packet. For example, before obtaining the first concatenated data packet and performing subsequent processing (for example, integrity protection and/or encryption) on the first concatenated data packet, the first communication apparatus may associate the first concatenated data packet with the first count value.

A data packet transmit end (for example, the first communication apparatus) may maintain a first variable for each PDCP entity. The first variable is, for example, a TX_NEXT state variable. When assembling a PDCP SDU into a PDCP data PDU, the transmit end may perform the following processing:
associating current TX_NEXT with the PDCP SDU, or associating a value of current TX_NEXT with the PDCP SDU, where in this case, the value of TX_NEXT is used as a count value of the PDCP SDU;
setting a PDCP SN of the PDCP data PDU to TX_NEXT modulo 2^{[pdcp-SN-SizeUL]}; and
increasing TX_NEXT by 1.
modulo represents a modulo operation, pdcp-SN-SizeUL represents a variable, and the variable is configured by the network device. For example, a value of the variable is 12 least significant bits or 18 least significant bits of the count value. The count value and the PDCP SN of the current PDCP data PDU are determined through the foregoing process.

For example, the first concatenated data packet includes N original data packets, and N is an integer greater than or equal to 2. The first communication apparatus may associate the first concatenated data packet with the first count value in a plurality of implementations, which are described below with examples. 1. First manner of associating a count value.

The sending PDCP entity of the first communication apparatus associates N original data packets with N count values, where the N count values are consecutive count values. For example, the association manner includes: The sending PDCP entity associates current TX_NEXT with a first original data packet of the N original data packets, and the sending PDCP entity increases a value of TX _NEXT by 1. Then, the sending PDCP entity performs a similar operation on a next original data packet of the N original data packets until all the N original data packets are processed completely, so that the N original data packets are associated with N count values, where the original data packets are in a one-to-one correspondence with the count values. The PDCP layer further associates a first count value of the N count values as a count value of the first concatenated data packet. The first count value is, for example, a minimum count value of the N count values, for example, a count value of the first original data packet of the N original data packets. Alternatively, the first count value is, for example, a maximum count value of the N count values, for example, a count value of a last original data packet of the N original data packets.

In this association manner, the sending PDCP entity may set the PDCP SN of the first concatenated data packet to the first count value modulo 2^{[pdcp-SN-SizeUL]}. The PDCP SN is included in the PDCP header. Therefore, the PDCP SN is also a PDCP SN of the second concatenated data packet. The PDCP SN of the first concatenated data packet may be included in a header (for example, a PDCP header) of the second concatenated data packet. The PDCP SN of the first concatenated data packet that is set in the foregoing manner is, for example, M least significant bits of the first count value, where M is an integer greater than or equal to 1 and less than or equal to 32.

In this manner, the first concatenated data packet has the associated first count value, and the N original data packets included in the first concatenated data packet also have corresponding associated count values, so that the receive end can not only order the first concatenated data packet, but also order the N original data packets when the first concatenated data packet needs to be restored. 2. Second manner of associating a count value.

The sending PDCP entity of the first communication apparatus associates the first concatenated data packet with a first count value, and does not reserve another count value for the first concatenated data packet. It may also be understood that the first count value is a count value uniquely associated with the first concatenated data packet, and the first count value is consecutive to a count value of a previous data packet (an original data packet or a concatenated data packet) of the first concatenated data packet. For example, after associating the first concatenated data packet with the first count value, the sending PDCP entity associates a next data packet (which may be an original data packet or may be a concatenated data packet) of the first concatenated data packet with a count value. In this case, the count value associated with the next data packet is also consecutive to the first count value. For example, the first count value is 1, and the count value of the next data packet is 2. In other words, in the third manner, the N original data packets are associated with no count value, and no count value is reserved for the first concatenated data packet. For example, the sending PDCP entity associates a value of current TX_NEXT with the first concatenated data packet, and then increases the value of TX_NEXT by 1. In addition, the sending PDCP entity may set the PDCP SN of the first concatenated data packet to the first count value modulo 2^{[pdcp-SN-SizeUL]}. The PDCP SN of the first concatenated data packet may be included in a header (for example, a PDCP header) of the second concatenated data packet. The PDCP SN of the first concatenated data packet that is set in the foregoing manner is, for example, M least significant bits of the first count value.

Mainly in consideration of retransmission, the N original data packets are associated with count values, or a count value is reserved for the first concatenated data packet. For example, if the receive end does not support the data packet concatenation function during retransmission, the second concatenated data packet may need to be restored to the N original data packets before retransmission. This involves that the N original data packets need to have corresponding count values. However, in actual application, a probability of occurrence of a retransmission scenario is not high, and especially in a scenario with a high coverage level, a quantity of retransmission times is not large. Therefore, an implementation process can be simplified in the second manner of associating a count value.

For the foregoing two manners, a manner in which the sending PDCP entity of the first communication apparatus associates the first concatenated data packet with a count value may be configured by the network device, preconfigured in the first communication apparatus and the second communication apparatus, or specified in a protocol.

S503. The first communication apparatus performs integrity protection and/or encryption on the first concatenated data packet, to obtain a second concatenated data packet.

After obtaining the first concatenated data packet and associating the first concatenated data packet with the count value, the sending PDCP entity of the first communication apparatus may perform a corresponding operation on the first concatenated data packet, for example, perform integrity protection and/or encryption on the first concatenated data packet, to obtain a concatenated data packet that is referred to as the second concatenated data packet. If the sending PDCP entity of the first communication apparatus needs to perform integrity protection and encryption on the first concatenated data packet, integrity protection may be performed before encryption, encryption may be performed before integrity protection, or integrity protection and encryption may be performed simultaneously. The sending PDCP entity may obtain the second concatenated data packet after performing integrity protection and/or encryption on the first concatenated data packet, or in addition to integrity protection and/or encryption, the sending PDCP entity performs some other processing on the first concatenated data packet, and then obtains the second concatenated data packet. The other processing includes, for example, adding a PDCP header to the first concatenated data packet.

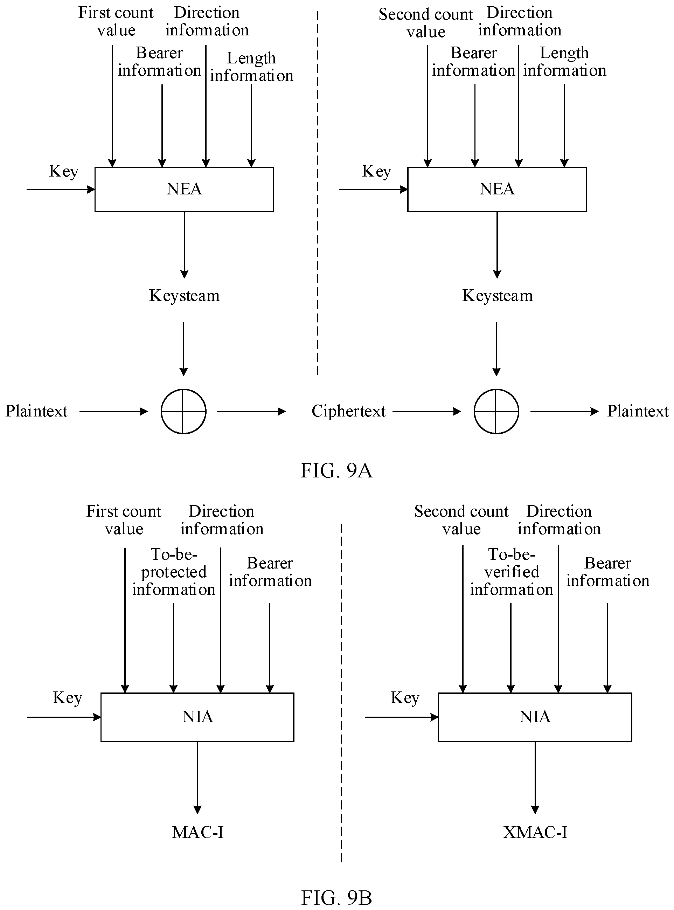

For example, the first communication apparatus may perform integrity protection and/or encryption on the first concatenated data packet based on the first count value. Refer to FIG. 9A, which is a schematic diagram in which a first communication apparatus encrypts a first concatenated data packet based on a first count value and a second communication apparatus decrypts the first concatenated data packet based on a second count value. In FIG. 9A, a left part represents an operation performed by the first communication apparatus, and a right part represents an operation performed by the second communication apparatus. As a transmit end, the first communication apparatus may use the first count value, bearer (bearer) information, direction (direction) information, length (length) information, and the like as input of an encryption algorithm, and may obtain a keystream (keysteam block) through calculation processing of the encryption algorithm. The first communication apparatus performs exclusive OR processing on the keystream and a plaintext (plaintext block) to obtain a ciphertext (ciphertext). In this way, encryption is completed. The plaintext is, for example, the first concatenated data packet. The first communication apparatus sends the ciphertext to the second communication apparatus. The second communication apparatus may use the second count value, bearer, direction, length, and the like as input of an encryption algorithm, and may obtain a keystream through calculation processing of the encryption algorithm. The second communication apparatus performs exclusive OR processing on the keystream and the received ciphertext to obtain the plaintext. In this way, decryption is completed.

The used encryption algorithm is, for example, an encryption algorithm for 5G (encryption algorithm for 5G, NEA), and a key (key) used in the encryption algorithm is, for example, a user plane key. The bearer is, for example, a value obtained by subtracting 1 from an ID of a radio bearer (radio bearer, RB). The RB is, for example, an RB used to carry the first concatenated data packet between the first communication apparatus and the second communication apparatus. The RB is, for example, a data radio bearer (data radio bearer, DRB). The ID of the RB may be configured by a network device for a UE by using an RRC message, direction represents a transmission direction, for example, uplink or downlink. For example, when a value of direction is "0", direction represents uplink, and when a value of direction is "1", direction represents downlink. length represents a length of the first concatenated data packet.

Then, refer to FIG. 9B, which is a schematic diagram in which a first communication apparatus performs integrity protection on a first concatenated data packet and a second communication apparatus performs integrity verification on the first concatenated data packet. In FIG. 9B, a left part represents an operation performed by the first communication apparatus, and a right part represents an operation performed by the second communication apparatus. As a transmit end, the first communication apparatus may use the first count value, to-be-protected information (for example, a PDCP SDU, a PDCP header, and an SDAP header that are included in the first concatenated data packet), direction information, bearer information, and the like as input of an integrity protection algorithm, and may obtain a MAC-I through calculation processing of the integrity protection algorithm. In this way, integrity protection is completed. The second communication apparatus may use the second count value, to-be-verified information (for example, a PDCP SDU, a PDCP header, and an SDAP header that are included in the first concatenated data packet), direction information, bearer information, and the like as input of an integrity protection algorithm, and may obtain a MAC-I (an XMAC-I shown in FIG. 9B) through calculation processing of the integrity protection algorithm. The second communication apparatus may compare the MAC-I with the MAC-I of the received second concatenated data packet. If the two are consistent, it is determined that the second concatenated data packet is not tampered with. If the two are inconsistent, it is determined that the second concatenated data packet is tampered with. In this way, integrity protection verification is completed.

The used integrity protection algorithm is, for example, an integrity algorithm for 5G (integrity algorithm for 5G, NIA), and a key used in the algorithm is, for example, a user plane key. For explanations of bearer and direction, refer to the foregoing description.

Optionally, before obtaining the second concatenated data packet, the first communication apparatus may further compress the first concatenated data packet. In other words, the first concatenated data packet included in the second concatenated data packet is a compressed concatenated data packet.

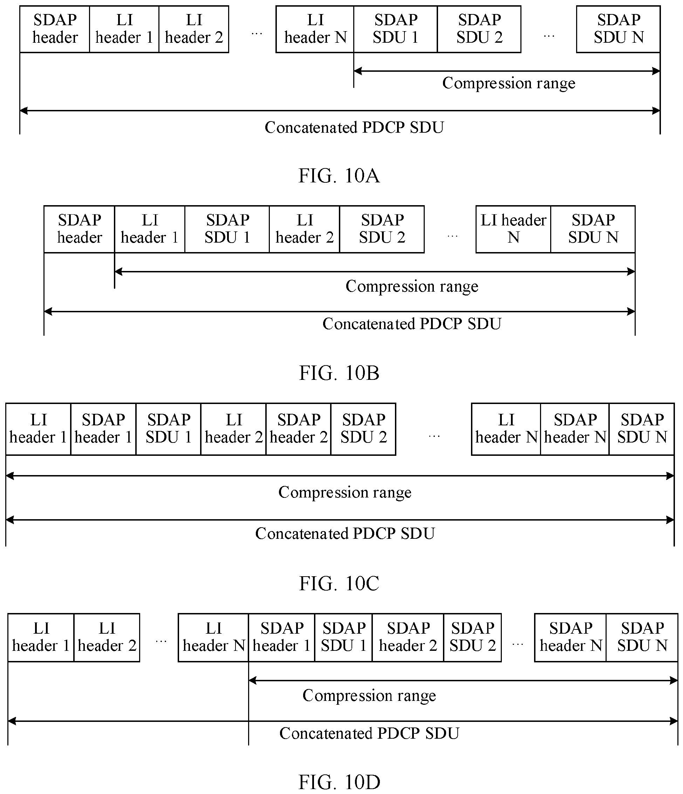

During compression, for example, parts of the N original data packets in the first concatenated data packet other than SDAP headers are compressed, but the SDAP headers do not participate in compression. For example, when LI headers of the N original data packets are located before the first original data packet in the first concatenated data packet, and the N original data packets share one SDAP header, this compression manner may be used because it is considered that the SDAP header is included in the original data packets. Alternatively, for example, the N original data packets in the first concatenated data packet are compressed, but other parts (for example, SDAP headers) of the first concatenated data packet do not participate in compression. For example, when LI headers of the N original data packets are located before the first original data packet in the first concatenated data packet, and the N original data packets share one SDAP header, this compression manner may be used because it is considered that the SDAP header is not included in the original data packets. For both the foregoing two manners, refer to FIG. 10A.

Alternatively, the N original data packets included in the first concatenated data packet and N LI headers of the N original data packets participate in compression, but other parts of the first concatenated data packet do not participate in compression. For example, when the N original data packets share one SDAP header in the first concatenated data packet, but all the original data packets have their respective corresponding LI headers in the first concatenated data packet, this compression manner may be used because it is considered that the SDAP header is not included in the original data packets. Alternatively, parts of the N original data packets included in the first concatenated data packet other than SDAP headers and N LI headers of the N original data packets participate in compression, but other parts of the first concatenated data packet do not participate in compression. For example, when the N original data packets share one SDAP header in the first concatenated data packet, but all the original data packets have their respective corresponding LI headers in the first concatenated data packet, this compression manner may be used because it is considered that the SDAP header is included in the original data packets. For both the foregoing two manners, refer to FIG. 10B.

Alternatively, the N original data packets included in the first concatenated data packet, N SDAP headers of the N original data packets, and N LI headers of the N original data packets participate in compression, but other parts of the first concatenated data packet do not participate in compression. For example, when all the original data packets have their respective corresponding LI headers and their respective corresponding SDAP headers in the first concatenated data packet, this compression manner may be used because it is considered that the SDAP headers are not included in the original data packets. Alternatively, the N original data packets included in the first concatenated data packet and N LI headers of the N original data packets participate in compression, but other parts of the first concatenated data packet do not participate in compression, where each of the N original data packets includes an SDAP header. For example, when all the original data packets have their respective corresponding LI headers and their respective corresponding SDAP headers in the first concatenated data packet, this compression manner may be used because it is considered that the SDAP headers are included in the original data packets. For both the foregoing two manners, refer to FIG. 10C.

Alternatively, the N original data packets included in the first concatenated data packet and N SDAP headers of the N original data packets participate in compression, but other parts of the first concatenated data packet do not participate in compression. For example, when each original data packet has a corresponding LI header in the first concatenated data packet, each original data packet has a corresponding SDAP header in the first concatenated data packet, the N LI headers of the N original data packets are located before the first original data packet in the first concatenated data packet, and the N SDAP headers of the N original data packets are placed before corresponding SDAP SDUs in an interleaved manner, this compression manner may be used because it is considered that the SDAP headers are not included in the original data packets. Alternatively, the N original data packets included in the first concatenated data packet and N LI headers of the N original data packets participate in compression, but other parts of the first concatenated data packet do not participate in compression. For example, when each original data packet has a corresponding LI header in the first concatenated data packet, each original data packet has a corresponding SDAP header in the first concatenated data packet, the N LI headers of the N original data packets are located before the first original data packet in the first concatenated data packet, and the N SDAP headers of the N original data packets are placed before corresponding SDAP SDUs in an interleaved manner, this compression manner may be used because it is considered that the SDAP headers are included in the original data packets. For both the foregoing two manners, refer to FIG. 10D.

In each of FIG. 10A to FIG. 10D, an example in which the first concatenated data packet is a concatenated PDCP SDU is used. For example, if the first communication apparatus is a UE, and the second communication apparatus is a network device, the compression technology is, for example, an uplink data compression (uplink data compression, UDC) technology.

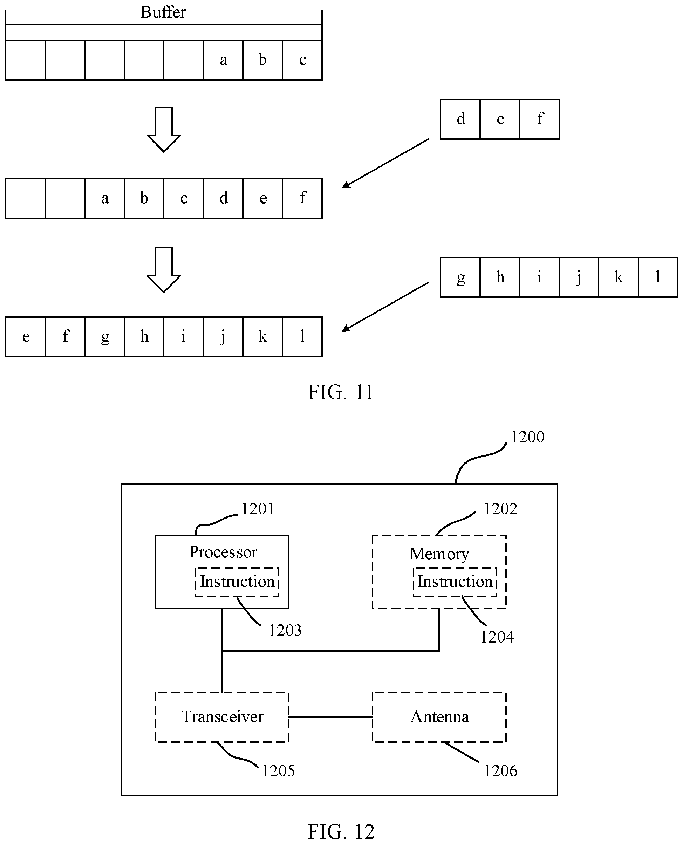

In UDC, the UE functions as the transmit end to compress data packets, and the network device functions as the receive end to decompress the data packets. Both compression and decompression are performed based on a same buffer (buffer) status jointly maintained by the transmit end and the receive end. The buffer status may be content included in a buffer (or information included in the buffer). When compressing a data packet, the transmit end performs compression based on a current status of a buffer (for example, a first buffer). After the compression succeeds, the transmit end places, from a back end of the buffer, original information of the currently compressed data packet before compression into the buffer. When a first data packet is compressed, the buffer may not include information about a previous data packet. In this case, the transmit end may perform compression based on preset information. For example, the preset information is a predefined dictionary. For example, referring to FIG. 11, a buffer includes "abc", and "abc" is, for example, preset information. When needing to compress a data packet "def", a transmit end may perform compression based on "abc", and compress the data packet "def" to obtain a compressed data packet 1, and the transmit end may place "def" from a back end of the buffer into the buffer. Then, when needing to compress a data packet "ghijkl", the transmit end may perform compression based on "abcdef" in the buffer, that is, perform compression based on all content in the buffer each time. After the data packet "ghijkl" is compressed, a compressed data packet 2 is obtained, and the transmit end may place the data packet "ghijkl" from the back end of the buffer into the buffer. Because a storage space of the buffer is limited, "abed" is squeezed out of the buffer based on a first in first out (first in first out, FIFO) principle. In this case, if the transmit end further needs to compress another data packet, compression is performed based on "efghijkl" included in the buffer. After receiving the compressed data packet 1, a receive end may perform decompression based on the preset information "abc" in the buffer to obtain the data packet "def", and place the data packet "def" from the back end of the buffer into the buffer. After receiving the data packet 2, the receive end may perform decompression based on the information "abcdef" in the buffer to obtain the data packet "ghijkl", and place the data packet "ghijkl" from the back end of the buffer into the buffer, so that "abed" is squeezed out of the buffer. It can be learned that a buffer status of the receive end is always consistent with a buffer status of the transmit end, so that it can be ensured that the receive end can correctly perform decompression.

In this embodiment of this application, a concatenated data packet can also be compressed and then sent, so that transmission overheads can be further reduced.

If the PDCP layer of the first communication apparatus needs to perform integrity protection, encryption, and compression on the first concatenated data packet, an execution sequence of the three processes is not limited. For example, integrity protection is first performed, then encryption is performed, and finally compression is performed; encryption is first performed, then integrity protection is performed, and finally compression is performed; integrity protection is first performed, then compression is performed, and finally encryption is performed; encryption is first performed, then compression is performed, and finally integrity protection is performed; compression is first performed, then integrity protection is performed, and finally encryption is performed; compression is first performed, then encryption is performed, and finally integrity protection is performed; any two of the three processes may be performed simultaneously, and the other one process may be performed before or after the two processes; or the three processes may be performed simultaneously.

S504. The first communication apparatus sends the second concatenated data packet.

That the first communication apparatus sends the second concatenated data packet may be understood as that the PDCP layer of the first communication apparatus sends the second concatenated data packet to a lower layer (for example, an RLC layer) of the PDCP layer of the first communication apparatus. In this case, "send" may also be referred to as "deliver".

Alternatively, that the first communication apparatus sends the second concatenated data packet may alternatively be understood as that the first communication apparatus sends the second concatenated data packet to the second communication apparatus. Correspondingly, the second communication apparatus receives the second concatenated data packet from the first communication apparatus. In FIG. 5A, this is used as an example. Certainly, if the first communication apparatus sends the second concatenated data packet to the second communication apparatus, actually, the second concatenated data packet may be further sent to the second communication apparatus after being processed correspondingly by other protocol layers of the first communication apparatus. The other protocol layers include, for example, an RLC layer, a MAC layer, and a physical layer.

S505. The second communication apparatus determines a second count value associated with the first concatenated data packet.

After receiving the second concatenated data packet, the second communication apparatus may perform a corresponding operation on the second concatenated data packet, for example, perform integrity protection verification and/or decryption on the second concatenated data packet. For example, if the first communication apparatus performs integrity protection on the first concatenated data packet, the second communication apparatus may perform integrity protection verification on the second concatenated data packet; or if the first communication apparatus encrypts the first concatenated data packet, the second communication apparatus may decrypt the second concatenated data packet. In addition, if the first communication apparatus compresses the first concatenated data packet, the second communication apparatus may further decompress the second concatenated data packet. A data packet obtained by performing the series of operations on the second concatenated data packet is the first concatenated data packet. For example, the foregoing processing processes may be performed at the PDCP layer of the second communication apparatus.

The second communication apparatus may determine the count value of the first concatenated data packet based on the PDCP SN of the first concatenated data packet. For example, the count value determined by the second communication apparatus for the first concatenated data packet is referred to as the second count value. If transmission is performed correctly, the first count value should be equal to the second count value. A data packet receive end may calculate a count value of the data packet based on a PDCP SN carried in a PDCP header of the data packet. A calculation manner is described as follows:
If RCVD_SN < SN(RX DELIV) - Window_Size, RCVD HFN = HFN(RX DELIV) + 1; or if RCVD_SN ≥ SN(RX_DELIV) + Window_Size, RCVD_HFN = HFN(RX DELIV) - 1. Otherwise, RCVD_HFN = HFN(RX DELIV). In addition, RCVD_COUNT = [RCVD HFN, RCVD_SN]. RCVD_SN represents a PDCP SN of a currently received data packet, RCVD_HFN represents an HFN of the currently received data packet, RCVD_COUNT represents a count value of the currently received data packet, and Window_Size represents a length of a receive window maintained by the data packet receive end. SN(RX_DELIV) represents a PDCP SN of a first data packet that the PDCP layer has not delivered to the upper layer before, and HFN(RX_DELIV) represents an HFN of the first data packet that the PDCP layer has not delivered to the upper layer before. The second communication apparatus may calculate the second count value of the first concatenated data packet based on the method.

In addition to determining the count value of the first concatenated data packet, the second communication apparatus further needs to update a second variable maintained by the second communication apparatus. The second variable may indicate a count value of a next data packet expected to be received, or the second variable may indicate a count value of a next PDCP SDU expected to be received. For example, the second variable is RX_NEXT. The next data packet expected to be received may be a common original data packet, or may be a concatenated data packet. For example, after determining the second count value, the second communication apparatus may compare the second count value with a current value of the second variable. If the second count value is a minimum count value of the N count values, and the second count value is greater than or equal to the current value of the second variable, the second communication apparatus may update the value of the second variable to the second count value plus N. Alternatively, if the second count value is a maximum count value of the N count values, and the second count value is greater than or equal to the current value of the second variable, the second communication apparatus may update the value of the second variable to the second count value plus 1.

Alternatively, after determining the second count value, the second communication apparatus may perform corresponding conversion on the second count value before being compared with the current value of the second variable. For example, if the second count value is the minimum count value of the N count values, the second communication apparatus determines a sum of the second count value and (N-1), and then compares the sum of the second count value and (N-1) with the current value of the second variable. If the sum of the second count value and (N-1) is greater than or equal to the current value of the second variable, the second communication apparatus may update the value of the second variable to the second count value plus N. Alternatively, if the second count value is the maximum count value of the N count values, the second communication apparatus determines a difference between the second count value and (N-1), and then compares the difference between the second count value and (N-1) with the current value of the second variable. If the difference between the second count value and (N-1) is greater than or equal to the current value of the second variable, the second communication apparatus may update the value of the second variable to the second count value plus 1.

The receiving PDCP entity of the second communication apparatus may determine, by using the second indication information included in the first header of the first concatenated data packet, a quantity of original data packets included in the first concatenated data packet. Alternatively, the receiving PDCP entity of the second communication apparatus may determine, by parsing the LI header included in the first concatenated data packet, a quantity of original data packets included in the first concatenated data packet. It is assumed that the quantity of original data packets included in the first concatenated data packet is N. If the first communication apparatus uses the foregoing first manner of associating a count value for the first concatenated data packet, the receiving PDCP entity of the second communication apparatus may de-concatenate the first concatenated data packet into the N original data packets, and associate each of the N original data packets with one count value sequentially starting from the second count value. In other words, the receiving PDCP entity of the second communication apparatus may determine a count value of an n^{th} original data packet included in the first concatenated data packet as (the second count value + n-1), where the n^{th} original data packet is one of the N original data packets, and n is an integer from 1 to N. For example, the second communication apparatus associates a first original data packet of the N original data packets with the second count value, associates a second original data packet of the N original data packets with the second count value + 1, associates a third original data packet of the N original data packets with the second count value + 2, and so on. Such an expression as the first original data packet or the second original data packet of the N original data packets is a location sequence of the N original data packets in the first concatenated data packet. A buffer (buffer) may be set for each original data packet at a data packet receive end (for example, the second communication apparatus). After restoring the first concatenated data packet to the N original data packets, the first communication apparatus may place the N original data packets into N buffers. Placing one data packet into a corresponding buffer is equivalent to that a status of the buffer is received. The first communication apparatus may perform reordering processing on the N original data packets based on the count values of the N original data packets. Alternatively, if the first communication apparatus uses the foregoing first manner of associating a count value for the first concatenated data packet, the receiving PDCP entity of the second communication apparatus may not first de-concatenate the first concatenated data packet into the N original data packets, but perform reordering processing on the first concatenated data packet as a whole based on the second count value. After the first concatenated data packet participates in reordering, if the first concatenated data packet needs to be delivered to an upper layer (for example, an SDAP layer), de-concatenation processing is performed on the first concatenated data packet to obtain the N original data packets, and the N original data packets are delivered to the upper layer. Alternatively, if the first communication apparatus uses the foregoing second manner of associating a count value for the first concatenated data packet, the receiving PDCP entity of the second communication apparatus may not de-concatenate the first concatenated data packet, but perform reordering processing on the first concatenated data packet as a whole. In addition, the second communication apparatus only considers that the data packet corresponding to the second count value has been received.

Optionally, the second communication apparatus may generate a PDCP status report, and the PDCP status report may indicate the data packet received by the second communication apparatus. The second communication apparatus may send the PDCP status report to the first communication apparatus. After receiving the PDCP status report, the first communication apparatus can determine a status of receiving a data packet by the first communication apparatus. Optionally, the first communication apparatus can further determine, based on the PDCP status report, whether to perform retransmission, or determine a data packet to be retransmitted. For example, if the PDCP status report includes a count value of the data packet received by the second communication apparatus, a data packet corresponding to a count value that is not included in the PDCP status report is a data packet that is received unsuccessfully by the second communication apparatus. Alternatively, the PDCP status report is implemented by using a bitmap (bitmap). A quantity of bits included in the bitmap is equal to a quantity of data packets sent by the first communication apparatus, or a quantity of bits included in the bitmap is equal to a quantity of count values of data packets sent by the first communication apparatus. If a value of a bit included in the bitmap is "0", it indicates that a data packet corresponding to the bit is not received. If a value of a bit included in the bitmap is "1", it indicates that a data packet corresponding to the bit is received.

An example in which the PDCP status report is implemented by using a bitmap is used. If the first communication apparatus uses the foregoing first manner of associating a count value for the first concatenated data packet, for example, the second communication apparatus unsuccessfully receives the first concatenated data packet, values of bits corresponding to N count values of the N original data packets in the PDCP status report are all "0". If the second communication apparatus successfully receives the first concatenated data packet, the values of the N bits corresponding to the count values of the N original data packets in the PDCP status report are all "1". In other words, the PDCP status report may indicate a status of receiving the original data packets.

Alternatively, if the first communication apparatus uses the foregoing second manner of associating a count value for the first concatenated data packet, for example, the second communication apparatus unsuccessfully receives the first concatenated data packet, a value of a bit corresponding to the second count value in the PDCP status report is "0". However, if the second communication apparatus successfully receives the first concatenated data packet, the value of the bit corresponding to the second count value in the PDCP status report is "1". In other words, the first concatenated data packet exists as a whole, and the second communication apparatus does not perform additional feedback on the original data packets in the first concatenated data packet.

In the foregoing description process, an example in which S505 is based on receiving the second concatenated data packet from the first communication apparatus is used. In other words, the processing process of the second communication apparatus is relevant to the processing process of the first communication apparatus. Alternatively, there is another possibility that the processing process of the second communication apparatus is irrelevant to the processing process of the first communication apparatus. For example, the second communication apparatus receives a concatenated data packet, and a transmit end of the concatenated data packet may be the first communication apparatus or another communication apparatus (the first communication apparatus is used as an example). A manner of processing the concatenated data packet at the transmit end may be the foregoing processing manner used by the first communication apparatus, or may be another manner. After receiving the concatenated data packet, the second communication apparatus may also determine a count value of the concatenated data packet in the manner described in S505, update the second variable (for example, a plurality of manners of updating a second variable are provided in S505, and the second communication apparatus may update the second variable in one of the manners. Different from the foregoing, in this case, a manner in which the second communication apparatus updates the second variable is irrelevant to a manner in which the first communication apparatus sets the count value of the concatenated data packet, or when determining how to update the second variable, the second communication apparatus does not need to consider a corresponding processing manner of the first communication apparatus), determines a quantity of original data packets included in the concatenated data packet, and reorders the concatenated data packet (for example, a plurality of reordering manners are provided in S505, and the second communication apparatus may perform reordering in one of the manners. Different from the foregoing, in this case, a manner in which the second communication apparatus reorders the concatenated data packet is irrelevant to a manner in which the first communication apparatus associates the count value, or when reordering the concatenated data packet, the second communication apparatus does not need to consider a corresponding processing manner of a transmit end of the concatenated data packet), or generates a PDCP status report (for example, a plurality of manners of generating a PDCP status report are provided in S505, and the second communication apparatus may generate the PDCP status report in one of the manners. Different from the foregoing, in this case, a manner in which the second communication apparatus generates the PDCP status report is irrelevant to a manner in which the first communication apparatus associates the count value, or when generating the PDCP status report, the second communication apparatus does not need to consider a corresponding processing manner of the first communication apparatus).

In other words, the first communication apparatus and the second communication apparatus are two independent apparatuses, and the two apparatuses separately perform their respective processing processes, and do not affect each other. Even if the first communication apparatus does not obtain the concatenated data packet in the foregoing manner, the second communication apparatus may perform processing in the manner in S505; or even if the second communication apparatus does not perform processing in the manner in S505, the first communication apparatus may obtain the concatenated data packet in the foregoing manner.

The following involves a first communication apparatus, a second communication apparatus, and a third communication apparatus, whose implementation processes are similar. The three apparatuses are independent of each other, and a processing process of one apparatus does not affect a processing process of another communication apparatus. The three communication apparatuses may all perform processing based on a process described below, or some or all of the three communication apparatuses may not perform processing in a manner described below. However, if some of the three communication apparatuses do not perform processing in the manner described below, a remaining communication apparatus in the three communication apparatuses other than the some communication apparatuses may still continue to perform processing in the manner described below. For example, even if the first communication apparatus does not perform processing in the manner described below, the second communication apparatus and/or the third communication apparatus may continue to perform processing in the manner described below.

In a communication process, a PDCP entity may be re-established. For example, when the UE performs cell handover, a PDCP entity is re-established for the UE, and a PDCP entity is also re-established for a network device (for example, a source network device and/or a target network device of the UE, where the source network device of the UE is a network device accessed by the LTE before cell handover, for example, referred to as a first network device, and the target network device of the UE is a network device accessed by the UE after cell handover, for example, referred to as a second network device). When a PDCP entity is re-established, if the first communication apparatus needs to retransmit a data packet, because a concatenated data packet is introduced in this embodiment of this application, a retransmission process may involve concatenation-related processing. Therefore, optionally, this embodiment of this application may further include the following steps related to retransmission.

S506. If a PDCP entity is re-established, the second communication apparatus sends, to a third communication apparatus, data packets received from the first communication apparatus, and correspondingly, the third communication apparatus receives the data packets from the second communication apparatus. Alternatively, when an upper layer requests to re-establish a PDCP entity, the receiving PDCP entity of the second communication apparatus should send, to the third communication apparatus, data packets received from the first communication apparatus, and correspondingly, the third communication apparatus receives the data packets from the second communication apparatus. An uplink transmission process is used as an example. For example, the first communication apparatus is a UE, the second communication apparatus is a first network device, and the third communication apparatus is a second network device. For example, in S506, the receiving PDCP entity of the second communication apparatus sends, to a receiving PDCP entity of the third communication apparatus, the data packet received from the UE. Correspondingly, the receiving PDCP entity of the third communication apparatus receives the data packet from the receiving PDCP entity of the second communication apparatus.

If a PDCP entity is re-established, and the second communication apparatus has a data packet that has been received from the UE but has not been sent to the third communication apparatus, S506 may be performed. In S506 and subsequent S507, an example in which the third communication apparatus supports the data packet concatenation function is used, or an example in which the third communication apparatus supports the data packet concatenation function and the third communication apparatus supports a data packet concatenation parameter negotiated by the first communication apparatus and the second communication apparatus is used. The data packet concatenation parameter includes, for example, the first threshold and/or the second threshold. Before the UE performs cell handover, the first network device may send a handover request (handover request) message to the second network device, to request to hand over the UE to the second network device. The second network device may perform admission control (admission control), and may send a handover request acknowledge (handover request acknowledge) message to the first network device. Optionally, in this embodiment of this application, the second network device may indicate, by using the handover request acknowledge message, whether the second network device supports the data packet concatenation function and/or supports the data packet concatenation parameter negotiated by the UE and the first network device, so that the first network device can determine whether the second network device supports the data packet concatenation function.

In addition, if the second network device indicates, by using the handover request acknowledge message, that handover of the UE is allowed, the first network device may send a handover command to the UE, where the handover command is sent, for example, by using an RRC reconfiguration (RRC reconfiguration) message, to instruct the LTE to be handed over. Optionally, in this embodiment of this application, the first network device may indicate, by using the handover request acknowledge message, whether the second network device supports the data packet concatenation function and/or supports the data packet concatenation parameter negotiated by the LTE and the first network device, so that the UE can also determine whether the second network device supports the data packet concatenation function.

Because the UE needs to be handed over from the second communication apparatus to the third communication apparatus, the second communication apparatus may send, to the third communication apparatus, data packets that have been received from the UE. The data packets may include a concatenated data packet and/or an original data packet. For example, the third communication apparatus may also re-establish a PDCP entity.

S507. If a PDCP entity is re-established, the first communication apparatus retransmits, starting from a first data packet whose acknowledgment information is not received, data packets in an order (for example, in ascending order) of count values of the data packets, and correspondingly, the third communication apparatus receives the retransmitted data packets from the first communication apparatus. Alternatively, when the upper layer requests to re-establish a PDCP entity, the first communication apparatus retransmits, starting from a first data packet whose acknowledgment information is not received, data packets in an order (for example, in ascending order) of count values of the data packets, and correspondingly, the third communication apparatus receives the retransmitted data packets from the first communication apparatus. The retransmitted data packets may include a concatenated data packet and/or an original data packet. The concatenated data packet includes, for example, the second concatenated data packet, and may further include another concatenated data packet. An example in which a PDCP entity is re-established because the UE performs cell handover is used.

Acknowledgment information is sent by an RLC layer of the first communication apparatus to a PDCP layer. After processing a data packet (including an original data packet and a concatenated data packet), a sending PDCP entity of the first communication apparatus sends the data packet to the RLC layer, and the RLC layer performs further processing on the data packet, for example, adds an RLC header to the data packet. The RLC layer of the first communication apparatus may send, if receiving an RLC status report of a data packet from an RLC layer of the receive end (for example, a second communication apparatus), acknowledgment information of the data packet to the PDCP layer; and does not send, if not receiving the RLC status report from the RLC layer of the receive end, the acknowledgment information of the data packet to the PDCP layer. In this case, if the sending PDCP entity of the first communication apparatus has a data packet whose acknowledgment information is not received, retransmission may start from the data packet (or start from a first data packet that is not acknowledged by the lower layer), and subsequent data packets are sequentially retransmitted. An uplink transmission process is used as an example in S507. The first communication apparatus is, for example, a UE. For example, the process may be performed by a sending PDCP entity of the UE. For example, the first communication apparatus sends data packets 1, 2, 3, 4, and 5, and receives acknowledgment information of the data packets 1, 2, and 4, but does not receive acknowledgment information of the data packets 3 and 5. In this case, during retransmission, the sending PDCP entity of the first communication apparatus may retransmit the data packets 3, 4, and 5.

Optionally, the first communication apparatus may further retransmit a data packet with reference to a PDCP status report. For example, the first communication apparatus may not retransmit a data packet that is received by the second communication apparatus and that is indicated by the PDCP status report. For example, still using the foregoing example, the sending PDCP entity of the first communication apparatus needs to retransmit the data packets 3, 4, and 5, but the PDCP status report from the second communication apparatus indicates that the second communication apparatus has received the data packet 5. In this case, the sending PDCP entity of the first communication apparatus may not retransmit the data packet 5, but retransmit only the data packets 3 and 4. Therefore, signaling overheads can be reduced, and redundant transmission processes can also be reduced. However, if the first communication apparatus uses the foregoing second manner of associating a count value for a concatenated data packet, the first communication apparatus may need to perform retransmission based on acknowledgment information, for example, retransmit data packets sequentially in an order of count values of the data packets starting from a first data packet whose acknowledgment information is not received.

It can be learned that, if the third communication apparatus supports the data packet concatenation function, or the third communication apparatus supports the data packet concatenation function and supports the data packet concatenation parameter negotiated by the first communication apparatus and the second communication apparatus, a retransmission manner is the same for both a concatenated data packet and an original data packet, and the retransmission manner is similar to that of the original data packet.

If header compression or UDC is not configured for the PDCP entity, the first communication apparatus may directly retransmit the concatenated data packet (for example, the first concatenated data packet); or if header compression or UDC is configured for the PDCP entity, the first communication apparatus needs to perform re-compression processing on the concatenated data packet (for example, the first concatenated data packet), and then retransmit a concatenated data packet obtained through the re-compression processing.

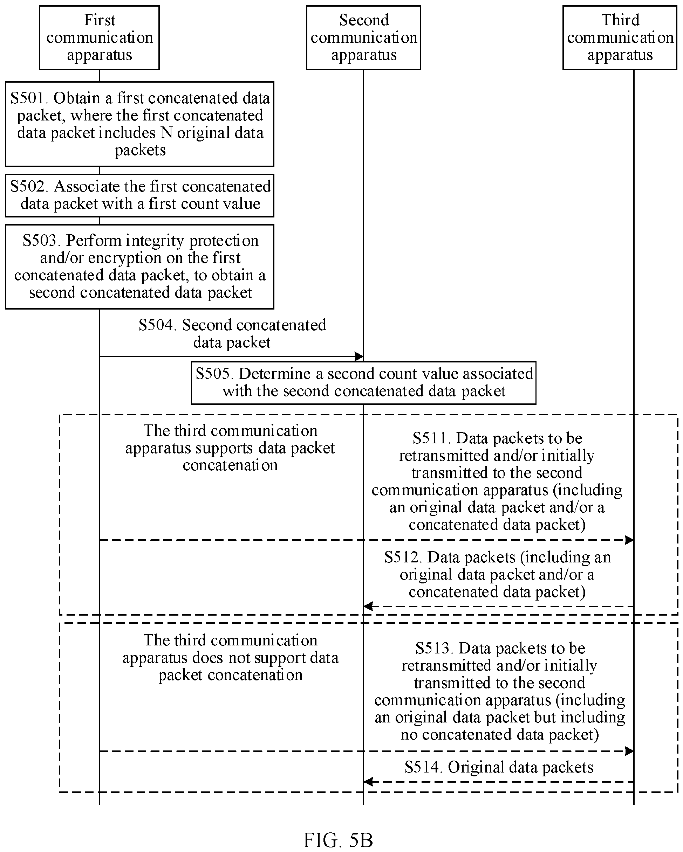

An uplink transmission process is used as an example in S506 and S507. S506 may occur before S507, S506 and S507 may occur simultaneously, or S506 may occur after S507. For a downlink transmission process, refer to FIG. 5B. FIG. 5B further includes S501 to S505 in addition to a case of re-establishing a PDCP entity in a downlink transmission process. For example, after S505, if the third communication apparatus supports the data packet concatenation function, and the third communication apparatus supports the data packet concatenation parameter negotiated by the first communication apparatus and the second communication apparatus, S506 and S507 in the embodiment shown in FIG. 5A are performed in an uplink transmission process, but S511 and S512 shown in FIG. 5B are performed in a downlink transmission process.

In FIG. 5B, the first communication apparatus is, for example, a first network device, the third communication apparatus is, for example, a second network device, and the second communication apparatus is a UE.

S511. If a PDCP entity is re-established, the first communication apparatus sends, to a third communication apparatus, data packets to be retransmitted and/or initially transmitted to the second communication apparatus, and correspondingly, the third communication apparatus receives the data packets from the first communication apparatus. The data packets to be retransmitted to the second communication apparatus may include a concatenated data packet and/or an original data packet. The data packets to be initially transmitted to the second communication apparatus may include a concatenated data packet and/or an original data packet. For example, the sending PDCP entity of the first communication apparatus sends, to a sending PDCP entity of the third communication apparatus, data packets to be retransmitted and/or initially transmitted to the second communication apparatus. Correspondingly, the sending PDCP entity of the third communication apparatus receives the data packets from the sending PDCP entity of the first communication apparatus. If a PDCP entity is re-established, and the first communication apparatus has data packets to be retransmitted and/or initially transmitted to the second communication apparatus, S511 may be performed.

In other words, if the first network device has data packets that need to be retransmitted and/or initially transmitted to the UE, because the UE needs to be handed over from the first network device to the second network device, the first network device may send the data packets that need to be retransmitted and/or initially transmitted to the UE to the second network device, and the second network device continues to send the data packets to the UE. Alternatively, it is understood that, if a PDCP entity is re-established, the first communication apparatus may forward, starting from a first data packet whose acknowledgment information is not received, all data packets associated with count values to the third communication apparatus. Correspondingly, the third communication apparatus receives the data packets from the first communication apparatus. The data packets that are associated with the count values and that start from the first data packet whose acknowledgment information is not received may include a retransmitted data packet and/or an initially transmitted data packet.

S512. If a PDCP entity is re-established, the third communication apparatus sends data packets in an order (for example, in ascending order) of count values of the data packets, and correspondingly, the second communication apparatus receives the data packets from the third communication apparatus.

For example, if the sending PDCP entity of the third communication apparatus receives data packets from the first communication apparatus, the third communication apparatus may send the data packets to the second communication apparatus in an order of count values of the data packets. Correspondingly, the receiving PDCP entity of the second communication apparatus receives the data packets from the sending PDCP entity of the third communication apparatus. Optionally, the third communication apparatus may also retransmit a data packet with reference to a PDCP status report from the second communication apparatus. For details, refer to related descriptions of the embodiment shown in FIG. 5A.

If the data packets sent by the first communication apparatus to the third communication apparatus include a concatenated data packet, the third communication apparatus may send the concatenated data packet to the second communication apparatus. If the data packets sent by the first communication apparatus to the third communication apparatus include an original data packet, the third communication apparatus may send the original data packet to the second communication apparatus. In other words, when the third communication apparatus supports the data packet concatenation function or supports the data packet concatenation parameter negotiated by the first communication apparatus and the second communication apparatus, if the first communication apparatus needs to forward, to the third communication apparatus, a concatenated data packet to be sent to the second communication apparatus, de-concatenation processing may not be performed; and if the third communication apparatus needs to send a concatenated data packet to the second communication apparatus, de-concatenation processing does not need to be performed either, thereby simplifying a data sending process.

For the downlink transmission process shown in FIG. 5B, S511 may occur before S512. Certainly, this is not limited. For example, S511 and S512 may occur simultaneously, or S511 may occur after S512.

If header compression or UDC is not configured for the PDCP entity, the third communication apparatus may directly retransmit the concatenated data packet (for example, the first concatenated data packet); or if header compression or UDC is configured for the PDCP entity, the third communication apparatus needs to perform re-compression processing on the concatenated data packet (for example, the first concatenated data packet), and then retransmit a concatenated data packet obtained through the re-compression processing.

S508. If a PDCP entity is re-established, the second communication apparatus sends, to the third communication apparatus, original data packets received from the first communication apparatus, and correspondingly, the third communication apparatus receives the original data packets from the second communication apparatus. Alternatively, when an upper layer requests to re-establish a PDCP entity, the second communication apparatus sends, to the third communication apparatus, original data packets received from the first communication apparatus, and correspondingly, the third communication apparatus receives the original data packets from the second communication apparatus. An uplink transmission process is used as an example. The first communication apparatus is, for example, a UE, the second communication apparatus is, for example, a first network device, and the third communication apparatus is, for example, a second network device.

It may be understood that an uplink transmission process is used as an example in FIG. 5A. In addition, in S508, an example in which the first communication apparatus uses the foregoing first manner of associating a count value is used.

For example, the second communication apparatus may send, to the third communication apparatus, all or some of original data packets received from the first communication apparatus. S508 to S510 are described by using an example in which the third communication apparatus does not support the data packet concatenation function and/or does not support the data packet concatenation parameter negotiated by the first communication apparatus and the second communication apparatus. If the third communication apparatus does not support the data packet concatenation function and/or does not support the data packet concatenation parameter negotiated by the first communication apparatus and the second communication apparatus, the second communication apparatus cannot send a concatenated data packet when sending data packets to the third communication apparatus; otherwise, the third communication apparatus cannot identify the data packets. Therefore, the second communication apparatus can send only an original data packet. If data packets that need to be sent to the third communication apparatus include a concatenated data packet, the second communication apparatus needs to de-concatenate the concatenated data packet into original data packets, and then send the original data packets to the third communication apparatus. A process of performing de-concatenation by the second communication apparatus is described below by using an example.

An example in which the second communication apparatus de-concatenates a first concatenated data packet is used. In this case, the first concatenated data packet is a concatenated PDCP SDU. In the foregoing first manner of associating a count value, the first communication apparatus associates N PDCP SDUs included in the concatenated PDCP SDU with N count values. In this case, the first communication apparatus may de-concatenate the concatenated PDCP SDU into the N PDCP SDUs, and may associate the N PDCP SDUs with N consecutive count values starting from a second count value. The second count value is a minimum count value of the N count values. In other words, the first communication apparatus associates the N PDCP SDUs with the N count values in a value ascending manner starting from the second count value. Alternatively, the second count value is a maximum count value of the N count values. In other words, the first communication apparatus associates the N PDCP SDUs with the N count values in a value descending manner starting from the second count value. The second communication apparatus only needs to send the N PDCP SDUs in an order of the count values.

S509. If a PDCP entity is re-established, the second communication apparatus skips sending, to the third communication apparatus, the data packets received from the first communication apparatus. Alternatively, when an upper layer requests to re-establish a PDCP entity, the second communication apparatus skips sending, to the third communication apparatus, the data packets received from the first communication apparatus. An uplink transmission process is used as an example. The first communication apparatus is, for example, a UE, the second communication apparatus is, for example, a first network device, and the third communication apparatus is, for example, a second network device. In addition, in S508, an example in which the first communication apparatus uses the foregoing second manner of associating a count value is used. For example, the second communication apparatus may deliver the data packets received from the first communication apparatus to an upper layer. For example, the second communication apparatus delivers all the data packets received from the first communication apparatus to an upper layer, where the upper layer is, for example, an SDAP layer. Alternatively, the second communication apparatus may discard all the data packets received from the first communication apparatus. For example, the second communication apparatus discards all the data packets received from the first communication apparatus. The data packets received by the second communication apparatus from the first communication apparatus are, for example, stored at a PDCP layer (or a PDCP entity) of the second communication apparatus. In addition, the second communication apparatus may maintain the second variable and the third variable. Alternatively, the second communication apparatus may initialize the maintained second variable and/or the maintained third variable to 0, or may not initialize the second variable and/or the maintained third variable to 0 (for example, keep a value of the second variable and/or a value of the third variable unchanged). In this case, if the second communication apparatus does not initialize the second variable and/or the third variable to 0, the second communication apparatus may send, to the third communication apparatus, a value of a maintained variable (for example, the second variable and/or the third variable) that is not initialized to 0, and the third communication apparatus also maintains the second variable and the third variable. In this case, the third communication apparatus may update, based on the value of the variable sent by the second communication apparatus, a value of a corresponding variable maintained by the third communication apparatus.

If the first communication apparatus uses the foregoing first manner of associating a count value, S508 is performed. However, if the first communication apparatus uses the foregoing second manner of associating a count value, S509 is performed. In other words, S508 and S509 are two parallel optional manners.

S510. If a PDCP entity is re-established, the first communication apparatus retransmits a plurality of original data packets in an order of the count values of the data packets, and correspondingly, the third communication apparatus receives the plurality of retransmitted original data packets from the first communication apparatus. Alternatively, when an upper layer requests to re-establish a PDCP entity, the first communication apparatus retransmits a plurality of original data packets in an order of the count values of the data packets. Correspondingly, the third communication apparatus receives the plurality of retransmitted original data packets from the first communication apparatus. For example, the first communication apparatus retransmits, starting from a first data packet whose acknowledgment information is not received, a plurality of original data packets in an order (for example, in ascending order) of the count values of the data packets. If the first communication apparatus has a concatenated data packet that needs to be retransmitted, the concatenated data packet also needs to be de-concatenated into original data packets before being retransmitted. Based on different manners in which the first communication apparatus associates a concatenated data packet with a count value, the concatenated data packet may be de-concatenated into original data packets in different manners. The following uses an example for description.
1. A first restoration manner is also referred to as a first de-concatenation manner. If the first communication apparatus associates a concatenated data packet with a count value in the foregoing first manner of associating a count value, the first de-concatenation manner may be used to restore the concatenated data packet.

An example in which the first communication apparatus de-concatenates a first concatenated data packet is used. In this case, the first concatenated data packet is a concatenated PDCP SDU. In the foregoing first manner of associating a count value, the first communication apparatus associates N PDCP SDUs included in the concatenated PDCP SDU with N count values. In this case, the first communication apparatus may de-concatenate the concatenated PDCP SDU into the N PDCP SDUs, where the N PDCP SDUs have their respective associated count values, and the first communication apparatus only needs to send the N PDCP SDUs in an order of the count values. Alternatively, if the first communication apparatus buffers N PDCP SDUs, the first communication apparatus does not need to perform a de-concatenation operation on the concatenated PDCP data PDU, but only needs to send the buffered N PDCP SDUs to the third communication apparatus. It can be learned that when the first manner of associating a count value is used, a process of restoring the concatenated data packet is simple.

When this de-concatenation manner is used, the third communication apparatus receives retransmitted original data packets from the first communication apparatus, and also receives an original data packet from the second communication apparatus. In this case, the third communication apparatus may reorder the original data packets received from the first communication apparatus and the third communication apparatus. In addition, the third communication apparatus may send a PDCP status report to the first communication apparatus. In this case, the first communication apparatus may not need to retransmit a received data packet indicated by the PDCP status report, to reduce transmission overheads. 2. A second restoration manner is also referred to as a second de-concatenation manner. If the first communication apparatus associates a concatenated data packet with a count value in the foregoing second manner of associating a count value, the second de-concatenation manner may be used to restore the concatenated data packet.

An example in which the first communication apparatus de-concatenates a first concatenated data packet is used. For example, the first concatenated data packet is a concatenated PDCP SDU. In the foregoing second manner of associating a count value, the first communication apparatus associates the first concatenated data packet with the first count value, and does not reserve a count value for the first concatenated data packet. In this case, the first communication apparatus may de-concatenate the concatenated PDCP SDU into the N PDCP SDUs, and may set count values for the N PDCP SDUs based on a case that the value of the first variable is the first value. The first variable is, for example, a TX_NEXT variable, and the first variable may be used to determine a count value of a sent data packet. For a case of determining the value of the first variable, refer to the descriptions of the foregoing two manners of associating a count value.

For example, when a PDCP entity is re-established, the first communication apparatus may initialize the value of the first variable to a first value. The first value is, for example, determined based on a count value of a first data packet (which may be a PDCP SDU, or may be a concatenated PDCP SDU) that is not acknowledged by a lower layer, or the first value is, for example, 0. The first value of the first variable maintained by the first communication apparatus, the first value of the second variable maintained by the second communication apparatus, and the first value of the second variable maintained by the third communication apparatus need to be consistent. After initializing the value of the first variable to the first value, the first communication apparatus may re-associate to-be-sent PDCP SDUs with count values sequentially.

When the second de-concatenation manner is used, the third communication apparatus receives retransmitted original data packets from the first communication apparatus, and a data packet that has been received by the second communication apparatus from the first communication apparatus is not sent to the third communication apparatus. In this case, the third communication apparatus only needs to reorder the retransmitted original data packets received from the first communication apparatus.

If header compression or UDC is not configured for the PDCP entity, the first communication apparatus (uplink) or the third communication apparatus (downlink) may directly retransmit the concatenated data packet (for example, the first concatenated data packet); or if header compression or UDC is configured for the PDCP entity, the first communication apparatus (uplink) or the third communication apparatus (downlink) needs to perform re-compression processing on the concatenated data packet (for example, the first concatenated data packet), and then retransmit a concatenated data packet obtained through the re-compression processing.

S508 (or S509) may occur before S510, S508 (or S509) may occur after S510, or S508 (or S509) and S510 may occur simultaneously.

An uplink transmission process is used as an example in S508 to S510. For a downlink transmission process, still refer to FIG. 5B. FIG. 5B further includes S501 to S505 in addition to a case of re-establishing a PDCP entity in a downlink transmission process. For example, after S505, if the third communication apparatus does not support the data packet concatenation function, and/or the third communication apparatus does not support the data packet concatenation parameter negotiated by the first communication apparatus and the second communication apparatus, S508 (or S509) and S510 in the embodiment shown in FIG. 5A are performed in an uplink transmission process, but S513 and S514 shown in FIG. 5B are performed in a downlink transmission process.

S513. If a PDCP entity is re-established, the first communication apparatus sends, to the third communication apparatus, original data packets to be retransmitted and/or initially transmitted to the second communication apparatus, and correspondingly, the third communication apparatus receives the original data packets from the first communication apparatus. For example, the sending PDCP entity of the first communication apparatus sends, to a sending PDCP entity of the third communication apparatus, original data packets to be retransmitted and/or initially transmitted to the second communication apparatus. Correspondingly, the sending PDCP entity of the third communication apparatus receives the original data packets from the sending PDCP entity of the first communication apparatus. In other words, if the first network device has original data packets that need to be retransmitted and/or initially transmitted to the UE, the first network device may send the original data packets to the second network device, and the second network device continues to send the original data packets to the UE. Alternatively, it is understood that, if a PDCP entity is re-established, the first communication apparatus may forward, starting from a first data packet whose acknowledgment information is not received, all original data packets associated with count values to the third communication apparatus. Correspondingly, the third communication apparatus receives the original data packets from the first communication apparatus. The original data packets that are associated with the count values and that start from the first data packet whose acknowledgment information is not received may include a retransmitted original data packet and/or an initially transmitted original data packet.

If the third communication apparatus does not support the data packet concatenation function and/or does not support the data packet concatenation parameter negotiated by the first communication apparatus and the second communication apparatus, the first communication apparatus cannot send a concatenated data packet when sending data packets to the third communication apparatus; otherwise, the third communication apparatus cannot identify the data packets. Therefore, the first communication apparatus can send only an original data packet. In this case, if data packets that need to be sent include a concatenated data packet, the concatenated data packet needs to be restored to original data packets, and then the original data packets are sent to the third communication apparatus. "Restore" may be understood as "de-concatenate". Based on different manners in which the first communication apparatus associates a concatenated data packet with a count value, the first communication apparatus may de-concatenate the concatenated data packet into original data packets in different manners. The following uses an example for description.
1. A first restoration manner is also referred to as a first de-concatenation manner. If the first communication apparatus associates a concatenated data packet with a count value in the foregoing first manner of associating a count value, the first de-concatenation manner may be used to restore the concatenated data packet.

An example in which the first communication apparatus de-concatenates a first concatenated data packet is used. For example, the first concatenated data packet is a concatenated PDCP SDU. In the foregoing first manner of associating a count value, the first communication apparatus associates N PDCP SDUs included in the concatenated PDCP SDU with N count values. In this case, the first communication apparatus may de-concatenate the concatenated PDCP SDU into the N PDCP SDUs, and may associate the N PDCP SDUs with N consecutive count values starting from a second count value. The second count value is a minimum count value of the N count values. In other words, the first communication apparatus associates the N PDCP SDUs with the N count values in a value ascending manner starting from the second count value. Alternatively, the second count value is a maximum count value of the N count values. In other words, the first communication apparatus associates the N PDCP SDUs with the N count values in a value descending manner starting from the second count value. The first communication apparatus only needs to send the N PDCP SDUs in an order of the count values.

Alternatively, if the first communication apparatus buffers N PDCP SDUs, the first communication apparatus does not need to perform a de-concatenation operation on the concatenated PDCP SDU, but only needs to send the buffered N PDCP SDUs to the third communication apparatus.

It can be learned that when the first manner of associating a count value is used, a process of restoring the concatenated data packet is simple.

2. A second restoration manner is also referred to as a second de-concatenation manner. If the first communication apparatus associates a concatenated data packet with a count value in the foregoing second manner of associating a count value, the second de-concatenation manner may be used to restore the concatenated data packet.

An example in which the first communication apparatus de-concatenates a first concatenated data packet is used. For example, the first concatenated data packet is a concatenated PDCP SDU. In the foregoing second manner of associating a count value, the first communication apparatus associates the first concatenated data packet with the first count value, and does not reserve a count value for the first concatenated data packet. In this case, the first communication apparatus may de-concatenate the concatenated PDCP SDU into the N PDCP SDUs, and may set count values for the N PDCP SDUs based on a case that the value of the first variable is the first value. The first variable is, for example, a TX_NEXT variable, and the first variable may be used to determine a count value of a data packet. For a case of determining the value of the first variable, refer to the descriptions of the foregoing two manners of associating a count value.

For example, when a PDCP entity is re-established, the first communication apparatus initializes the value of the first variable to a first value. The first value is, for example, determined based on a count value of a first data packet (which may be a PDCP data PDU or may be a concatenated PDCP data PDU, that is, may be a common original data packet or may be a concatenated data packet) that is not acknowledged by a lower layer, or the first value is, for example, 0. After the first communication apparatus initializes the value of the first variable to the first value, the first communication apparatus may re-associate to-be-sent PDCP SDUs with count values sequentially. For example, the to-be-sent PDCP SDUs include PDCP SDUs 1, 2, 3, 4 and 5, where the PDCP SDUs 3, 4, and 5 belong to the first concatenated data packet, and the PDCP SDUs 1 and 2 do not belong to a concatenated data packet, that is, do not participate in concatenation. For example, it is determined, based on the first value, that a count value of the PDCP SDU 1 is 1, a count value of the PDCP SDU 2 is 2, a count value of the PDCP SDU 3 is 3, a count value of the PDCP SDU 4 is 4, and a count value of the PDCP SDU 5 is 5.

S514. If a PDCP entity is re-established, the third communication apparatus sends a plurality of original data packets in an order (for example, in ascending order) of count values of the data packets, and correspondingly, the second communication apparatus receives the plurality of original data packets from the third communication apparatus. Alternatively, when an upper layer requests to re-establish a PDCP entity, the third communication apparatus sends a plurality of original data packets in an order (for example, in ascending order) of the count values of the data packets. Correspondingly, the second communication apparatus receives the plurality of original data packets from the third communication apparatus. In this case, in S514, the third communication apparatus may send a plurality of original data packets, and does not send a concatenated data packet. For example, the plurality of original data packets are from the first communication apparatus, and the plurality of original data packets may include the N original data packets in the first concatenated data packet.

If the first communication apparatus sends the original data packets to be retransmitted and/or initially transmitted to the LTE to the third communication apparatus, the third communication apparatus may send the original data packets to the second communication apparatus. If the first communication apparatus uses the foregoing first manner of associating a count value, the third communication apparatus only needs to send the original data packets to the second communication apparatus. The second communication apparatus may receive an original data packet (received before a PDCP entity is re-established) from the first communication apparatus, and may also receive a retransmitted original data packet from the third communication apparatus. The second communication apparatus may uniformly reorder the original data packets received from the first communication apparatus and the third communication apparatus.

Alternatively, if the first communication apparatus uses the foregoing second manner of associating a count value, when a PDCP is re-established, the second communication apparatus may initialize a value of a maintained second variable to a first value and/or initialize a value of a maintained third variable to a second value, where the second variable is, for example, RX_NEXT, and the third variable may be used to determine a reordering window. For example, the third variable indicates a count value of a first PDCP SDU that is not delivered to an upper layer and that is still waiting, and the third variable is, for example, RX_DELIV. The first value and the second value may be equal or may not be equal. For example, both the first value and the second value are 0, or the first value is a current value of the second variable maintained by the second communication apparatus (equivalent to keeping the value of the second variable unchanged), and the third value is a current value of the third variable maintained by the second communication apparatus (equivalent to keeping the value of the third variable unchanged). The first value of the first variable maintained by the first communication apparatus and the first value of the second variable maintained by the second communication apparatus need to be consistent. For example, the first communication apparatus initializes the value of the maintained first variable to 0, and the second communication apparatus initializes the value of the maintained second variable to 0; or the first communication apparatus initializes the value of the maintained first variable to a value determined based on the count value of the first data packet that is not acknowledged by the lower layer, and the second communication apparatus keeps the value of the maintained second variable unchanged. In addition, the second communication apparatus may deliver, to an upper layer, data packets received from the first communication apparatus before the PDCP entity is re-established. For example, the second communication apparatus delivers all the data packets received from the first communication apparatus to an upper layer, where the upper layer is, for example, an SDAP layer. Alternatively, the second communication apparatus may discard all the data packets received from the first communication apparatus. For example, the second communication apparatus discards all the data packets received from the first communication apparatus. The data packets received by the second communication apparatus from the first communication apparatus are, for example, stored at a PDCP layer (or a PDCP entity) of the second communication apparatus. Therefore, after the second communication apparatus receives the original data packets from the third communication apparatus, because count values of the original data packets are all unique and do not coincide with each other, confusion of the second communication apparatus is not caused. In this case, the third communication apparatus sends the original data packets to the second communication apparatus. The second communication apparatus may receive the original data packets from the third communication apparatus, and the second communication apparatus may reorder, based on the second variable and/or the third variable, the original data packets received from the third communication apparatus.

Optionally, the second communication apparatus may send a PDCP status report to the third communication apparatus. If the first communication apparatus uses the foregoing first manner of associating a count value, the third communication apparatus may no longer retransmit a data packet that has been received by the second communication apparatus and that is indicated by the PDCP status report, to save transmission resources.

S513 may occur before S514. Certainly, this is not limited. For example, S513 and S514 may occur simultaneously, or S513 may occur before S514.

In the foregoing solution, it may be considered that a plurality of technical processes are included, for example, the following seven processes are included: A first process is a process of determining a concatenated data packet, or a formation manner and content of a concatenated data packet; a second process is a process of enabling a data packet concatenation function; a third process is a process of determining a first threshold (also including a process of using the first threshold); a fourth process is a process of determining a second threshold (also including a process of using the second threshold); a fifth process is a process of allocating a count value to the concatenated data packet; a sixth process is a data packet compression process; and a seventh process is a process related to PDCP re-establishment. Any two or more of the seven processes may be combined and applied, or the seven processes may be independent of each other and do not depend on each other. For example, the first process and the second process are independent of each other, and the second process does not depend on the first process. In this case, even if the concatenated data packet is not determined, the data packet concatenation function may be enabled. In addition, the process related to PDCP re-establishment may also include a plurality of sub-processes. For example, based on whether the third communication apparatus supports the data packet concatenation function, it may be considered that the process related to PDCP re-establishment includes a related process in which the third communication apparatus supports the data packet concatenation function, and further includes a related process in which the third communication apparatus does not support the data packet concatenation function. The two processes may be independent of each other and do not depend on each other, or the two sub-processes may be combined and applied. In another example, the related process in which the third communication apparatus does not support the data packet concatenation function may be further divided into different processes based on different manners of associating original data packets obtained through de-concatenation with count values, for example, include a process corresponding to a manner of directly associating original data packets obtained through de-concatenation with N count values (the N original data packets are associated with the N count values during concatenation), and may further include a process corresponding to a manner of associating original data packets obtained through de-concatenation with count values based on the first variable whose value is the first value. The two processes may be independent of each other and do not depend on each other, or the two sub-processes may be combined and applied.

FIG. 12 is a schematic diagram of a structure of a communication apparatus according to an embodiment of this application. The communication apparatus 1200 may be the terminal device or a circuit system of the terminal device in any one of the embodiment shown in FIG. 5A or the embodiment shown in FIG. 5B, and is configured to implement the method corresponding to the terminal device in the foregoing method embodiments. For a specific function, refer to the descriptions in the foregoing method embodiments. For example, a circuit system is a chip system. The communication apparatus 1200 includes one or more processors 1201. The processor 1201 may also be referred to as a processing unit, and may implement a specific control function. The processor 1201 may be a general-purpose processor, a dedicated processor, or the like. For example, the processors include a baseband processor and a central processing unit. The baseband processor may be configured to process a communication protocol and communication data. The central processing unit may be configured to control the communication apparatus 1200, execute a software program, and/or process data. Different processors may be independent components, or may be disposed in one or more processing circuits, for example, integrated into one or more application-specific integrated circuits.

Optionally, the communication apparatus 1200 includes one or more memories 1202, configured to store an instruction 1204. The instruction 1204 may be run on the processor, to enable the communication apparatus 1200 to perform the method described in the foregoing method embodiments. Optionally, the memory 1202 may further store data. The processor and the memory may be separately arranged, or may be integrated together.

Optionally, the communication apparatus 1200 may include an instruction 1203 (which may also be referred to as code or a program sometimes). The instruction 1203 may be run on the processor, to enable the communication apparatus 1200 to perform the method described in the foregoing embodiments. The processor 1201 may store data.

Optionally, the communication apparatus 1200 may further include a transceiver 1205 and an antenna 1206. The transceiver 1205 may be referred to as a transceiver unit, a transceiver, a transceiver circuit, a transceiver, an input/output interface, or the like, and is configured to implement a transceiver function of the communication apparatus 1200 by using the antenna 1206. Optionally, the communication apparatus 1200 may further include one or more of the following components: a wireless communication module, an audio module, an external memory interface, an internal memory, a universal serial bus (universal serial bus, USB) interface, a power management module, an antenna, a loudspeaker, a microphone, an input/output module, a sensor module, a motor, a camera, a display, or the like. It can be understood that, in some embodiments, the communication apparatus 1200 may include more or fewer components, or some components are integrated, or some components are split. The components can be implemented in hardware, software, or a combination of software and hardware.

The processor 1201 and the transceiver 1205 that are described in this embodiment of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The communication apparatus described in this specification may be implemented by an independent device (for example, an independent integrated circuit or a mobile phone), or may be a part of a large device (for example, a module that may be embedded in another device). For details, refer to the foregoing descriptions about the terminal device and the network device. Details are not described herein again.

An embodiment of this application provides a terminal device. The terminal device (referred to as a UE for ease of description) may be used in the foregoing embodiments. The terminal device includes a corresponding means (means), unit, and/or circuit for implementing a function of the UE in any one of the embodiment shown in FIG. 5A or the embodiment shown in FIG. 5B. For example, the terminal device includes a transceiver module, configured to support the terminal device in implementing a transceiver function, and a processing module, configured to support the terminal device in processing a signal.

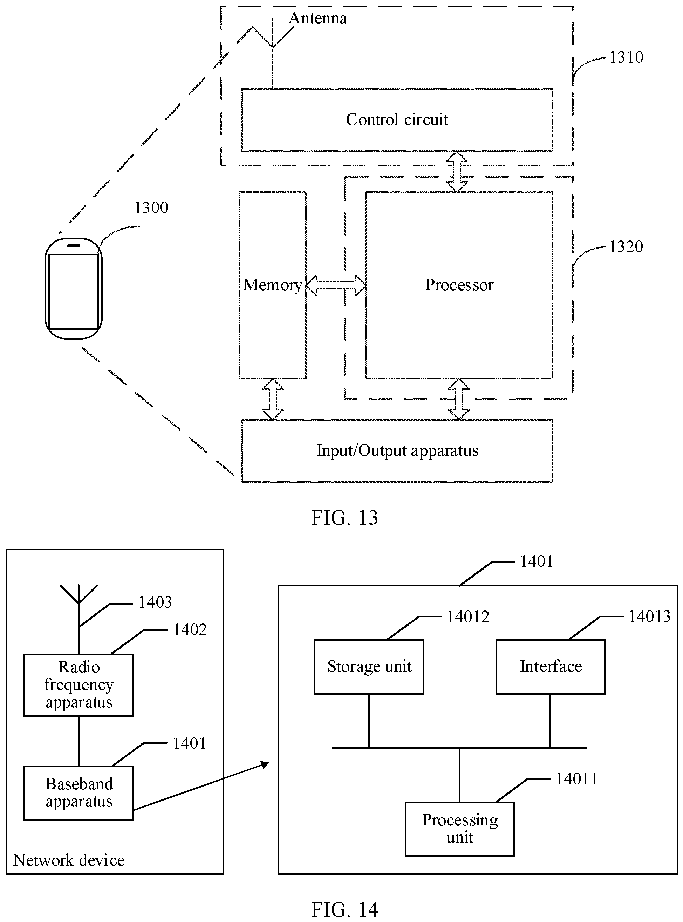

FIG. 13 is a schematic diagram of a structure of a terminal device according to an embodiment of this application.

The terminal device 1300 is applicable to an architecture shown in any one of FIG. 3 and FIG. 4A to FIG. 4C. For ease of description, FIG. 13 shows only main components of the terminal device 1300. As shown in FIG. 13, the terminal device 1300 includes a processor, a memory, a control circuit, an antenna, and an input/output apparatus. The processor is mainly configured to: process a communication protocol and communication data, control the entire terminal device 1300, execute a software program, and process data of the software program. The memory is mainly configured to store the software program and data. The control circuit is mainly configured to convert a baseband signal and a radio frequency signal and process the radio frequency signal. The antenna is mainly configured to receive and send a radio frequency signal in a form of an electromagnetic wave. The input/output apparatus, such as a touchscreen, a display, a microphone, or a keyboard, is mainly configured to: receive data input by a user and output data to the user. A person skilled in the art may understand that, for ease of description, FIG. 13 shows only one memory and one processor. In some embodiments, the terminal device 1300 may include a plurality of processors and a plurality of memories. The memory may also be referred to as a storage medium, a storage device, or the like. This is not limited in embodiments of this application. In an example, an antenna and a control circuit having a transceiver function may be considered as a transceiver unit 1310 of the terminal device 1300, and a processor having a processing function may be considered as a processing unit 1320 of the terminal device 1300. As shown in FIG. 13, a terminal device 1300 includes the transceiver unit 1310 and the processing unit 1320. The transceiver unit may also be referred to as a transceiver, a transceiver machine, a transceiver apparatus, or the like. Optionally, a component configured to implement the receiving function in the transceiver unit 1310 may be considered as a receiving unit, and a component configured to implement the sending function in the transceiver unit 1310 may be considered as a sending unit. In other words, the transceiver unit 1310 includes the receiving unit and the sending unit. For example, the receiving unit may also be referred to as a receiver machine, a receiver, a receiving circuit, or the like. The sending unit may be referred to as a transmitter machine, a transmitter, a transmitting circuit, or the like.

An embodiment of this application further provides a network device, and the network device may be used in the foregoing embodiments. The network device includes a means (means), unit, and/or circuit for implementing a function of the network device in any one of the embodiment shown in FIG. 5A or the embodiment shown in FIG. 5B. For example, the network device includes a transceiver module, configured to support the terminal device in implementing a transceiver function, and a processing module, configured to support the network device in processing a signal. FIG. 14 is a schematic diagram of a structure of a network device according to an embodiment of this application. As shown in FIG. 14, the network device is applicable to an architecture shown in any one of FIG. 3 and FIG. 4A to FIG. 4C. The network device includes a baseband apparatus 1401, a radio frequency apparatus 1402, and an antenna 1403. In an uplink direction, the radio frequency apparatus 1402 receives, by using the antenna 1403, information sent by a terminal device, and sends, to the baseband apparatus 1401 for processing, the information sent by the terminal device. In a downlink direction, the baseband apparatus 1401 processes information of the terminal device, and sends the information to the radio frequency apparatus 1402. The radio frequency apparatus 1402 processes the information of the terminal device and sends the information to the terminal device by using the antenna 1403.

The baseband apparatus 1401 includes one or more processing units 14011, a storage unit 14012, and an interface 14013. The processing unit 14011 is configured to support the network device in performing a function of the network device in the foregoing method embodiments. The storage unit 14012 is configured to store a software program and/or data. The interface 14013 is configured to exchange information with the radio frequency apparatus 1402. The interface includes an interface circuit, configured to input and output information. In an implementation, the processing unit is an integrated circuit, for example, one or more ASICs, one or more digital signal processors (digital signal processor, DSP), one or more field programmable gate arrays (field programmable gate array, FPGA), or a combination of the integrated circuits. The storage unit 14012 may be a storage element located in a same circuit as that of the processing unit 14011, that is, an on-chip storage element. Alternatively, the storage unit 14012 may be a storage element located on a different circuit from that of the processing unit 14011, that is, an off-chip storage element. The storage unit 14012 may be one memory, or may be a collective name of a plurality of memories or storage elements.

The network device may implement some or all of the steps in the foregoing method embodiments in a form of scheduling a program by using one or more processing units. For example, a corresponding function of the network device in any one of the embodiment shown in FIG. 5A or the embodiment shown in FIG. 5B is implemented. The one or more processing units may support radio access technologies of a same standard, and may also support radio access technologies of different standards.

When the several embodiments provided in this application are implemented in a form of a software function unit and sold or used as an independent product, the embodiments may be stored in a computer-readable storage medium. The computer software product is stored in a storage medium, and includes several instructions for instructing a computer device (which may be a personal computer, a server, a network device, or the like) to perform all or some of the steps of the method described in embodiments of this application. The foregoing computer-readable storage medium may be any usable medium that can be accessed by a computer. The following provides an example but does not impose a limitation: The computer-readable medium may include a random access memory (random access memory, RAM), a read-only memory (read-only memory, ROM), or any other medium that can be used to carry or store expected program code in a form of instructions or a data structure and can be accessed by a computer.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, comprising:
obtaining a first concatenated data packet, wherein the first concatenated data packet comprises N original data packets, N is an integer greater than or equal to 2, and the first concatenated data packet is associated with a first count value; and
sending a second concatenated data packet, wherein the second concatenated data packet is obtained by performing integrity protection and/or encryption on the first concatenated data packet.

2. The method according to claim 1, wherein
the first count value is a minimum count value of N count values, and the N count values are count values associated with the N original data packets.

3. The method according to claim 1 or 2, wherein
the first count value is used for integrity protection and/or encryption of the first concatenated data packet.

4. The method according to any one of claims 1 to 3, wherein
a first sequence number is comprised in a header of the second concatenated data packet, the first sequence number is M least significant bits of the first count value, and M is an integer greater than or equal to 1 and less than or equal to 32.

5. The method according to any one of claims 1 to 4, further comprising:
compressing parts of the N original data packets other than SDAP headers;
compressing the N original data packets;
compressing the N original data packets and N length indicators LIs corresponding to the N original data packets; or
compressing parts of the N original data packets other than SDAP headers and N LIs corresponding to the N original data packets.

6. The method according to any one of claims 1 to 5, wherein if a transmit end of the second concatenated data packet is a terminal device, the method further comprises:
receiving a first message, wherein the first message indicates a first threshold, and the first threshold is used to determine whether an original data packet is concatenatable.

7. The method according to any one of claims 1 to 6, wherein if a transmit end of the second concatenated data packet is a terminal device and a receive end of the second concatenated data packet is a network device, the method further comprises:
receiving a second message from the network device, wherein the second message indicates a second threshold, and the second threshold is used to determine whether concatenation of a concatenated data packet is completed.

8. The method according to any one of claims 1 to 7, further comprising:
sending first capability information of the terminal device to the network device, wherein the first capability information indicates a maximum length of a concatenated data packet supportable by the terminal device.

9. The method according to any one of claims 1 to 8, wherein if a transmit end of the second concatenated data packet is a network device and a receive end of the second concatenated data packet is a terminal device, the method further comprises:
sending a second message to the terminal device, wherein the second message indicates a second threshold, and the second threshold is used to determine whether concatenation of a concatenated data packet is completed.

10. The method according to any one of claims 1 to 9, further comprising:
receiving first capability information from the terminal device, wherein the first capability information indicates a maximum length of a concatenated data packet supportable by the terminal device.

11. The method according to any one of claims 1 to 10, wherein
if a transmit end of the second concatenated data packet is a terminal device, the method further comprises: receiving a third message, wherein the third message indicates to enable or disable a data packet concatenation function; or
if a transmit end of the second concatenated data packet is a network device, the method further comprises: sending a third message, wherein the third message indicates to enable or disable a data packet concatenation function.

12. The method according to any one of claims 1 to 11, further comprising:
determining to re-establish a PDCP entity, and sending, starting from a first data packet whose acknowledgment information is not received, data packets in ascending order of count values associated with data packets, wherein the sent data packets comprise the first concatenated data packet and/or original data packets.

13. The method according to claim 12, further comprising:
determining that a second network device supports the data packet concatenation function, wherein the second network device is a receive end of the sent data packets.

14. The method according to any one of claims 1 to 11, further comprising:
determining to re-establish a PDCP entity, and sending, from a first data packet whose acknowledgment information is not received, data packets in ascending order of count values associated with data packets, wherein the sent data packets comprise original data packets.

15. The method according to claim 14, further comprising:
determining to re-establish a PDCP entity, and determining that the first concatenated data packet needs to be retransmitted; and
de-concatenating the first concatenated data packet into the N original data packets.

16. The method according to claim 14, further comprising:
determining to re-establish a PDCP entity, and initializing a first variable to a first value, wherein the first value is 0, or the first value is determined based on a count value of the first data packet whose acknowledgment information is not received, and the first variable is used to determine a count value of a data packet.

17. The method according to claim 16, further comprising:
determining to re-establish a PDCP entity, and determining that the first concatenated data packet needs to be retransmitted; and
de-concatenating the first concatenated data packet into the N original data packets.

18. The method according to claim 16 or 17, further comprising:
associating the sent data packets with count values sequentially based on the first variable.

19. The method according to any one of claims 14 to 18, further comprising:
determining that a second network device does not support the data packet concatenation function or does not support a parameter of data packet concatenation supported by a first network device and a terminal device, wherein the second network device is a receive end of the sent data packets.

20. A communication method, comprising:
receiving a second concatenated data packet; and
determining a second count value associated with the second concatenated data packet, wherein the second count value is used for integrity verification and/or decryption of the second concatenated data packet.

21. The method according to claim 20, further comprising:
performing decryption and/or integrity verification on the second concatenated data packet to obtain a first concatenated data packet, wherein the first concatenated data packet comprises N original data packets, and N is an integer greater than or equal to 2.

22. The method according to claim 21, further comprising:
de-concatenating the first concatenated data packet into the N original data packets.

23. The method according to claim 21 or 22, further comprising:
associating the N original data packets with N consecutive count values starting from the second count value; or
associating the second concatenated data packet with N consecutive count values starting from the second count value.

24. The method according to claim 23, wherein
if the second count value is greater than or equal to a value of the second variable, updating the value of the second variable to the second count value plus N; or
if a sum of the second count value and (N-1) is greater than or equal to a value of the second variable, updating the value of the second variable to the second count value plus N, wherein
the second variable indicates a count value of a next data packet expected to be received.

25. The method according to any one of claims 21 to 24, wherein if a first network device is a network device accessed by a terminal device before cell handover and the first network device is a receive end of the second concatenated data packet, the method further comprises:
determining to re-establish a PDCP entity, and sending the N original data packets to a second network device, wherein the second network device is a network device accessed by the terminal device after cell handover.

26. The method according to any one of claims 20 to 24, wherein if a first network device is a network device accessed by a terminal device before cell handover and the first network device is a receive end of the second concatenated data packet, or if a terminal device is a receive end of the second concatenated data packet, the method further comprises:
determining to re-establish a PDCP entity, and delivering a data packet stored in the PDCP entity to an upper layer or discarding a data packet stored in the PDCP entity.

27. The method according to any one of claims 20 to 24 or claim 26, wherein if a first network device is a network device accessed by a terminal device before cell handover and the first network device is a receive end of the second concatenated data packet, the method further comprises:
determining to re-establish a PDCP entity, and sending a value of a third variable to a second network device, wherein the third variable is used to determine a reordering window.

28. The method according to any one of claims 20 to 24 or claim 26, wherein if the terminal device is a receive end of the second concatenated data packet, the method further comprises:
determining to re-establish a PDCP entity, and initializing a third variable to a second value, wherein the second value is 0, or the second value is determined based on a count value of the first data packet whose acknowledgment information is not received, and the third variable is used to determine a reordering window.

29. The method according to any one of claims 25 to 28, further comprising:
determining that the second network device does not support the data packet concatenation function or does not support a parameter of data packet concatenation supported by the first network device and the terminal device, wherein the second network device is a receive end of retransmitted data packets, and the terminal device is a transmit end of the concatenated PDCP data PDU.

30. A communication apparatus, comprising:
a processing unit, configured to obtain a first concatenated data packet, wherein the first concatenated data packet comprises N original data packets, N is an integer greater than or equal to 2, and the first concatenated data packet is associated with a first count value; and
a transceiver unit, configured to send a second concatenated data packet, wherein the second concatenated data packet is obtained by performing integrity protection and/or encryption on the first concatenated data packet.

31. The communication apparatus according to claim 30, wherein
the first count value is a minimum count value of N count values, and the N count values are count values associated with the N original data packets.

32. The communication apparatus according to claim 30 or 31, wherein
the first count value is used for integrity protection and/or encryption of the first concatenated data packet.

33. The communication apparatus according to any one of claims 30 to 32, wherein:
a first sequence number is comprised in a header of the second concatenated data packet, the first sequence number is M least significant bits of the first count value, and M is an integer greater than or equal to 1 and less than or equal to 32.

34. The communication apparatus according to any one of claims 30 to 33, wherein the method further comprises:
compressing parts of the N original data packets other than SDAP headers;
compressing the N original data packets;
compressing the N original data packets and N length indicators LIs corresponding to the N original data packets; or
compressing parts of the N original data packets other than SDAP headers and N LIs corresponding to the N original data packets.

35. The communication apparatus according to any one of claims 30 to 34, wherein: if a transmit end of the second concatenated data packet is a terminal device, the transceiver unit is further configured to receive a first message, wherein the first message indicates a first threshold, and the first threshold is used to determine whether an original data packet is concatenatable.

36. The communication apparatus according to any one of claims 30 to 35, wherein: if a transmit end of the second concatenated data packet is a terminal device and a receive end of the second concatenated data packet is a network device, the transceiver unit is further configured to receive a second message from the network device, wherein the second message indicates a second threshold, and the second threshold is used to determine whether concatenation of a concatenated data packet is completed.

37. The communication apparatus according to any one of claims 30 to 36, wherein: the transceiver unit is further configured to send first capability information of the communication apparatus to the network device, wherein the first capability information indicates a maximum length of a concatenated data packet supportable by the communication apparatus.

38. The communication apparatus according to any one of claims 30 to 37, wherein: if a transmit end of the second concatenated data packet is a network device and a receive end of the second concatenated data packet is a terminal device, the transceiver unit is further configured to send a second message to the terminal device, wherein the second message indicates a second threshold, and the second threshold is used to determine whether concatenation of a concatenated data packet is completed.

39. The communication apparatus according to any one of claims 30 to 38, wherein: the transceiver unit is further configured to receive first capability information from the terminal device, wherein the first capability information indicates a maximum length of a concatenated data packet supportable by the terminal device.

40. The communication apparatus according to any one of claims 30 to 39, wherein:
if a transmit end of the second concatenated data packet is a terminal device, the transceiver unit is further configured to receive a third message, wherein the third message indicates to enable or disable a data packet concatenation function; or
if a transmit end of the second concatenated data packet is a network device, the transceiver unit is further configured to send a third message, wherein the third message indicates to enable or disable a data packet concatenation function.

41. The communication apparatus according to any one of claims 30 to 40, wherein:
the processing unit is further configured to determine to re-establish a PDCP entity; and
the transceiver unit is further configured to send, starting from a first data packet whose acknowledgment information is not received, data packets in ascending order of count values associated with data packets, wherein the sent data packets comprise the first concatenated data packet and/or original data packets.

42. The communication apparatus according to claim 41, wherein the processing unit is further configured to determine that a second network device supports the data packet concatenation function, wherein the second network device is a receive end of the sent data packets.

43. The communication apparatus according to any one of claims 30 to 40, wherein:
the processing unit is further configured to determine to re-establish a PDCP entity; and
the transceiver unit is further configured to send, from a first data packet whose acknowledgment information is not received, data packets in ascending order of count values associated with data packets, wherein the sent data packets comprise original data packets.

44. The communication apparatus according to claim 43, wherein the processing unit is further configured to:
determine to re-establish a PDCP entity, and determine that the first concatenated data packet needs to be retransmitted; and
de-concatenate the first concatenated data packet into the N original data packets.

45. The communication apparatus according to claim 43, wherein the processing unit is further configured to determine to re-establish a PDCP entity, and initialize a first variable to a first value, wherein the first value is 0, or the first value is determined based on a count value of the first data packet whose acknowledgment information is not received, and the first variable is used to determine a count value of a data packet.

46. The communication apparatus according to claim 45, wherein the processing unit is further configured to:
determine to re-establish a PDCP entity, and determine that the first concatenated data packet needs to be retransmitted; and
de-concatenate the first concatenated data packet into the N original data packets.

47. The communication apparatus according to claim 45 or 46, wherein the processing unit is further configured to associate the sent data packets with count values sequentially based on the first variable.

48. The communication apparatus according to any one of claims 43 to 47, wherein: the processing unit is further configured to determine that a second network device does not support the data packet concatenation function or does not support a parameter of data packet concatenation supported by a first network device and a terminal device, wherein the second network device is a receive end of the sent data packets.

49. A communication apparatus, comprising:
a transceiver unit, configured to receive a second concatenated data packet; and
a processing unit, configured to determine a second count value associated with the second concatenated data packet, wherein the second count value is used for integrity verification and/or decryption of the second concatenated data packet.

50. The communication apparatus according to claim 49, wherein the processing unit is further configured to perform decryption and/or integrity verification on the second concatenated data packet to obtain a first concatenated data packet, wherein the first concatenated data packet comprises N original data packets, and N is an integer greater than or equal to 2.

51. The communication apparatus according to claim 50, wherein the processing unit is further configured to de-concatenate the first concatenated data packet into the N original data packets.

52. The communication apparatus according to claim 50 or 51, wherein the processing unit is further configured to:
associate the N original data packets with N consecutive count values starting from the second count value; or
associate the second concatenated data packet with N consecutive count values starting from the second count value.

53. The communication apparatus according to claim 52, wherein
if the second count value is greater than or equal to a value of the second variable, updating the value of the second variable to the second count value plus N; or
if a sum of the second count value and (N-1) is greater than or equal to a value of the second variable, updating the value of the second variable to the second count value plus N, wherein
the second variable indicates a count value of a next data packet expected to be received.

54. The communication apparatus according to any one of claims 50 to 53, wherein: if a first network device is a network device accessed by a terminal device before cell handover and the first network device is a receive end of the second concatenated data packet,
the processing unit is further configured to determine to re-establish a PDCP entity; and
the transceiver unit is further configured to send the N original data packets to a second network device, wherein the second network device is a network device accessed by the terminal device after cell handover.

55. The communication apparatus according to any one of claims 49 to 53, wherein: if a first network device is a network device accessed by a terminal device before cell handover and the first network device is a receive end of the second concatenated data packet, or if a terminal device is a receive end of the second concatenated data packet, the processing unit is further configured to determine to re-establish a PDCP entity, and deliver a data packet stored in the PDCP entity to an upper layer or discard a data packet stored in the PDCP entity.

56. The communication apparatus according to any one of claims 49 to 53 or claim 55, wherein if a first network device is a network device accessed by a terminal device before cell handover and the first network device is a receive end of the second concatenated data packet,
the processing unit is further configured to determine to re-establish a PDCP entity; and
the transceiver unit is further configured to send a value of a third variable to a second network device, wherein the third variable is used to determine a reordering window.

57. The communication apparatus according to any one of claims 49 to 53 or claim 55, wherein if the terminal device is a receive end of the second concatenated data packet, the processing unit is further configured to determine to re-establish a PDCP entity, and initialize a third variable to a second value, wherein the second value is 0, or the second value is determined based on a count value of the first data packet whose acknowledgment information is not received, and the third variable is used to determine a reordering window.

58. The communication apparatus according to any one of claims 54 to 57, wherein: the processing unit is further configured to determine that the second network device does not support the data packet concatenation function or does not support a parameter of data packet concatenation supported by the first network device and the terminal device, wherein the second network device is a receive end of retransmitted data packets, and the terminal device is a transmit end of the concatenated PDCP data PDU.

59. A communication apparatus, comprising a processor and a memory, wherein the memory is configured to store one or more computer programs, the one or more computer programs comprise a computer-executable instruction, and when the communication apparatus runs, the processor executes the one or more computer programs stored in the memory, to enable the communication apparatus to perform the method according to any one of claims 1 to 19.

60. A communication apparatus, comprising a processor and a memory, wherein the memory is configured to store one or more computer programs, the one or more computer programs comprise a computer-executable instruction, and when the communication apparatus runs, the processor executes the one or more computer programs stored in the memory, to enable the communication apparatus to perform the method according to any one of claims 20 to 29.

61. A computer-readable storage medium, wherein the computer-readable storage medium is configured to store a computer program, and when the computer program is run on a computer, the computer is enabled to perform the method according to any one of claims 1 to 19.

62. A computer-readable storage medium, wherein the computer-readable storage medium is configured to store a computer program, and when the computer program is run on a computer, the computer is enabled to perform the method according to any one of claims 20 to 29.

63. A circuit system, comprising:
a processor and an interface, wherein the processor is configured to invoke an instruction from the interface and run the instruction, and when executing the instruction, the processor implements the method according to any one of claims 1 to 19, or implements the method according to any one of claims 20 to 29.
